# EUROPEAN PATENT APPLICATION

(11) **EP 1 808 845 A1**
(43) Date of publication of application: **18.07.2007**
(21) Application number: 05805517.9
(22) Date of filing: 02.11.2005
(51) Int. Cl.: G09G 5/00, G09G 3/20, B60R 11/02

(54) **DISPLAY CONTROL DEVICE AND DISPLAY DEVICE**

(30) Priority: 02.11.2004 JP 2004318825; 03.12.2004 JP 2004350827; 15.03.2005 JP 2005073483; 23.06.2005 JP 2005182809; 31.08.2005 JP 2005251131; 01.09.2005 JP 2005253881; 05.09.2005 JP 2005255860
(71) Applicant: FUJITSU TEN LIMITED, Kobe-shi Hyogo 652-8510 (JP)
(72) Inventor: KOUZIMOTO, Kenichi, FUJITSU TEN LIMITED, Kobe-shi, Hyogo 6528510 (JP); HASHIMOTO, Junji, FUJITSU TEN LIMITED, Kobe-shi, Hyogo 6528510 (JP); KAMOTO, Mitsuhiro, FUJITSU TEN LIMITED, Kobe-shi, Hyogo 6528510 (JP); FUJIMOTO, Hiroyuki, FUJITSU TEN LIMITED, Kobe-shi, Hyogo 6528510 (JP); HASHIMOTO, Yoshiyuki, FUJITSU TEN LIMITED, Kobe-shi, Hyogo 6528510 (JP); YOKAWA, Taku, FUJITSU TEN LIMITED, Kobe-shi, Hyogo 6528510 (JP); UETA, Yoshikazu, FUJITSU TEN LIMITED, Kobe-shi, Hyogo 6528510 (JP); MINO, Atsushi, FUJITSU TEN LIMITED, Kobe-shi, Hyogo 6528510 (JP); KAMIKOBA, Kenta, FUJITSU TEN LIMITED, Kobe-shi, Hyogo 6528510 (JP); YAMANE, Toru, FUJITSU TEN LIMITED, Kobe-shi, Hyogo 6528510 (JP); FUJIWARA, Takanori, FUJITSU TEN LIMITED, Kobe-shi, Hyogo 6528510 (JP)
(74) Representative: Sunderland, James Harry
(86) International application number: PCT/JP2005/020223
(87) International publication number: WO 2006/049217

(57) **Abstract**

The present invention provides a first driving mode control unit (347), a second driving mode control unit (346, 349), and a mode switching unit (348), as elements to be used with a multi-view display apparatus (325) in which pixels that constitute a screen are disposed so that a first pixel group and a second pixel group are arranged in a distributed manner and that is operable to display, at the same time, mutually different pictures respectively for two directions, by driving the first pixel group and the second pixel group independently of each other, based on picture signals having mutually different sources. The first driving mode control unit (347) drives the first pixel group and the second pixel group independently of each other, based on the picture signals having the mutually different sources. The second driving mode control unit (346, 349) drives one of the pixel groups to improve the picture quality level of one of the pictures displayed by one of the pixel groups. The mode switching unit (348) exercises control to switch between the first driving mode control unit and the second driving mode control unit.

## Description

### TECHNICAL FIELD

The present invention relates to a multi-view display apparatus that is operable to provide, substantially at the same time, mutually different pieces of information that are independent of each other, respectively to a plurality of users on a single screen.

### BACKGROUND ART

Conventionally, most display apparatuses have been developed to optimize the display thereon so that the viewer is able to view an image equally having high quality no matter from which direction the display screen is viewed or so that a plurality of viewers are able to obtain the same information at the same time. However, there are many situations where it is preferable if a plurality of viewers are able to view mutually different pieces of information, respectively, on a single display. For example, in an automobile, the driver may wish to look at satellite navigation data, while a person sitting in the passenger seat may wish to watch pictures from an in-vehicle Digital Versatile Disk (DVD) player or a television tuner. In these situations, using two display apparatuses requires extra space and increases the cost.

Recently, as disclosed in Patent Document 1 and Patent Document 2, display apparatuses have been developed by which two screens are displayed at the same time on a single liquid crystal display so that, for example, the two mutually different screens can be viewed from the driver seat and the passenger seat, respectively. Also, as disclosed in Patent Document 3 and Patent Document 4, two-screen display apparatuses have been developed with which it is possible to display two mutually different types of pictures on a single screen at the same time.
Patent Document 1: Japanese Patent Application Laid-open No. H6-186526
Patent Document 2: Japanese Patent Application Laid-open No. 2000-137443
Patent Document 3: Japanese Patent Application Laid-open No. H11-331876
Patent Document 4: Japanese Patent Application Laid-open No. H09-46622
Patent Document 5: Japanese Patent Application Laid-open No. 2004-206089

### DISCLOSURE OF INVENTION

### PROBLEM TO BE SOLVED BY THE INVENTION

With the multi-view display apparatuses described above, when the pictures to be viewed from the mutually different viewing directions are displayed at the same time, each of the viewers is required to view the corresponding one of the pictures from an area having a predetermined range of distance and angle from the display apparatus so that he/she is able to view only one of the pictures clearly. However, because the predetermined range is so small, a problem where the pictures are doubled with each other (hereinafter, "doubled pictures") arises. More specifically, if any one of the viewers tries to view the picture from an area that is even slightly on the outside of the predetermined range, the picture the viewer intends to see is viewed while being doubled with the other picture. Especially, if two mutually different pictures are displayed, even when one or more viewers are viewing one of the pictures from only one direction, the viewers experience the problem of doubled pictures. It is very inconvenient for the viewers that their picture viewing positions are limited to ones within the extremely small range.

Also, the multi-view display apparatuses described above each need to have as many pixels as required in displaying source signals that correspond to the number of mutually different viewing directions, because the mutually different pictures that respectively correspond to the viewing directions need to be displayed on the single screen at the same time. To increase the number of pixels within a limited display area without making the size of the apparatus large, the pixels need to be formed with a high level of definition, and the display apparatuses tend to become very expensive. To avoid increasing the number of pixels in each display apparatus, pieces of pixel data that are included in the source signals are thinned out (hereinafter, "the resolution is lowered"), using a rule that is common among the pieces of pixel data (e.g., when the pictures are displayed for two viewing directions, pieces of pixel data that are in odd-number positions in a predetermined direction, i.e., the first, the third, the fifth positions and so on, are taken out from the pixel data included in each of the source signals.) However, when one or more viewers are viewing a picture from only one of the viewing directions, it is very inconvenient for the viewers that only the picture having a low resolution is displayed. In addition, when the source signals of the pictures displayed for the mutually different viewing directions are the same as one another, a viewer who is viewing the display from a direction positioned between any two of the viewing directions that are positioned adjacent to each other will see a picture that is very difficult to see, because the viewer sees the identical pictures displayed for the mutually different viewing directions overlapping one another.

In view of the problems described above, it is an object of the present invention to provide a display control apparatus and a display apparatus that are able to improve the visibility for the viewers in situations where one or more viewers of the multi-view display apparatus are viewing the display from only one direction, where only the picture displayed for one of the viewing directions is necessary, and where the source signals of the pictures that are displayed for the mutually different viewing directions are the same as one another.

### MEANS FOR SOLVING PROBLEM

To achieve the object of the present invention described above, the display control apparatus and the display apparatus according to an embodiment of the present invention controls, when mutually independent pictures for a plurality of viewing directions are displayed on a single screen, the output of the mutually independent pictures based on the relationship among the pictures.

When there is a priority relationship among the mutually independent pictures, to improve the picture quality level of one of the pictures that is displayed for a first viewing direction and has a higher priority, the picture signals to be displayed for the other one or more of the viewing directions are arranged to have the same luminance or to be in a single color. Also, one of the luminance and the color tone of the picture signals is adjusted based on the brightness level or the color tone of the surroundings.

Viewers in each of the viewing directions are detected. When one or more viewers have been detected only in one of the viewing directions from which the multi-view display apparatus can be viewed, a higher priority is given to the direction. As a result, it is possible to have an arrangement in which the visibility improvement is achieved automatically.

When the contents of the mutually independent pictures are the same as each other, the visibility from a direction positioned between any two of the viewing directions is improved by exercising control to rotate the displaying elements and the parallax barrier integrally and to change the position of the parallax barrier.

When the contents of the pictures that are displayed for the viewing directions are the same as each other, an editing process is performed so that the pixel that is driven by a source signal of a picture displayed for a first viewing direction and the pixel that is driven by a source signal of a picture displayed for a second viewing direction are relatively displaced with respect to a reference position. As a result, doubled pictures are utilized as a picture effect.

By performing the editing process so that the relative displacement amount with respect to the reference point dynamically changes, it is possible to obtain a dynamic effect. By selectively causing a portion of the pictures to be relatively displaced, it is possible to realize an emphasized display. It is suitable to apply such an emphasized display to a display output that has a high level of importance, such as a guidance picture output from a navigation apparatus.

### EFFECT OF THE INVENTION

As explained above, according to the present invention, an advantageous effect is achieved where it is possible to obtain a display control apparatus and a display apparatus that are able to improve the visibility for the viewers when one or more viewers of the multi-view display apparatus are viewing the display from only one direction, or when only the picture displayed for one of the viewing directions is necessary, or when the source signals of the pictures that are displayed for the mutually different viewing directions are the same as one another.

### BRIEF DESCRIPTION OF DRAWINGS

[Fig. 1] Fig. 1 is a conceptual drawing of a display apparatus according to an embodiment of the present invention;
[Fig. 2] Fig. 2 is a perspective view of an example in which the display apparatus shown in Fig. 1 is installed in a vehicle;
[Fig. 3] Fig. 3 is a cross sectional view of a display unit shown in Fig. 1;
[Fig. 4] Fig. 4 is a schematic of a structure observed when a display panel is viewed from a directly opposite position;
[Fig. 5] Fig. 5 is a schematic circuit diagram of a Thin Film Transistor (TFT) substrate;
[Fig. 6] Fig. 6 is a block diagram of the display apparatus shown in Fig. 1;
[Fig. 7] Fig. 7 is a block diagram of an image output unit 211 shown in Fig. 6;
[Fig. 8] Fig. 8 is a block diagram of a control unit 200 shown in Fig. 6;
[Fig. 9] Fig. 9 is a block diagram of a memory 218 shown in Fig. 6;
[Fig. 10] Fig. 10 is a drawing for explaining a procedure for generating picture signals to be displayed on a display unit from picture signals of two systems (#1); [Fig. 11] Fig. 11 is another drawing for explaining a procedure for generating picture signals to be displayed on the display unit from picture signals of two systems (#2);
[Fig. 12] Fig. 12 is a block diagram of an example in which a multi-view display apparatus controlled by a display control apparatus according to a first embodiment of the present invention is used in a car navigation apparatus installed in a vehicle;
[Fig. 13] Fig. 13 is a drawing for explaining the multi-view display apparatus shown in Fig. 12;
[Fig. 14] Fig. 14 is a drawing for explaining a liquid crystal display panel shown in;
[Fig. 15] Fig. 15 is a drawing for explaining evaluation results of doubled pictures;
[Fig. 16] Fig. 16 is a drawing for explaining evaluations performed on visibility of display apparatuses;
[Fig. 17] Fig. 17 is a flowchart used in a mode in which it is automatically judged whether there is anyone sitting in the passenger seat so that the function is automatically switched to improve the display quality of the picture displayed for the driver seat side;
[Fig. 18] Fig. 18 is a block diagram of an example in which a multi-view display apparatus according to a second embodiment of the present invention is used in a car navigation apparatus installed in a vehicle;
[Fig. 19] Fig. 19 is a drawing for explaining the multi-view display unit shown in Fig. 18;
[Fig. 20] Fig. 20 is a drawing for explaining a liquid crystal display panel;
[Fig. 21] Fig. 21 is a drawing for explaining a viewing-direction switching mechanism;
[Fig. 22] Fig. 22 is a flowchart used in a second mode;
[Fig. 23] Fig. 23 is a flowchart used in another example of the second mode;
[Fig. 24] Fig. 24 is a flowchart used in a third mode;
[Fig. 25] Fig. 25 is a flowchart used in another example of the third mode;
[Fig. 26] Fig. 26 is a drawing for explaining a display state switching process performed by a sliding mechanism;
[Fig. 27] Fig. 27 is a drawing for explaining a combining editing process performed by an editing processing unit on mutually different picture sources;
[Fig. 28] Fig. 28 is a drawing for explaining a combining editing process performed by the editing processing unit on the same picture source;
[Fig. 29] Fig. 29 is a drawing for explaining display mode selecting switches that serve as a display mode selecting unit according to another embodiment example;
[Fig. 30] Fig. 30 is a block diagram of an example in which a multi-view display apparatus controlled by a display control apparatus according to a third embodiment of the present invention is used in a car navigation apparatus installed in a vehicle;
[Fig. 31] Fig. 31 is a drawing for explaining a display control apparatus shown in Fig. 30;
[Fig. 32] Fig. 32 is a drawing for explaining a liquid crystal display panel;
[Fig. 33] Fig. 33 is a drawing for explaining a quasi-three-dimensional display (#1);
[Fig. 34] Fig. 34 is another drawing for explaining the quasi-three-dimensional display (#2);
[Fig. 35] Fig. 35 is a flowchart of a procedure in a picture signal editing process;
[Fig. 36] Fig. 36 is a drawing for explaining an emphasized display on a navigation screen;
[Fig. 37] Fig. 37 is a drawing for explaining a dynamic emphasized display;
[Fig. 38] Fig. 38 is a drawing for explaining an emphasized display based on an external input; and
[Fig. 39] Fig. 39 is a drawing for explaining a screen edge portion process.

### EXPLANATIONS OF LETTERS OR NUMERALS

- 1:: FIRST PICTURE SOURCE
- 2:: SECOND PICTURE SOURCE
- 3:: FIRST IMAGE DATA
- 4:: SECOND IMAGE DATA
- 5:: DISPLAY CONTROL UNIT
- 6:: DISPLAY DATA
- 7:: DISPLAY UNIT
- 8:: FIRST DISPLAY IMAGE
- 9:: SECOND DISPLAY IMAGE
- 10:: VIEWER
- 11:: VIEWER
- 12:: PASSENGER SEAT
- 13:: DRIVER SEAT
- 14:: WINDSHIELD
- 15:: OPERATING UNIT
- 16:: SPEAKER
- 100:: LIQUID CRYSTAL DISPLAY PANEL
- 101:: BACKLIGHT
- 102:: POLARIZER
- 10 3 :: POLARIZER
- 104:: TFT SUBSTRATE
- 105:: LIQUID CRYSTAL LAYER
- 106:: COLOR FILTER SUBSTRATE
- 107:: GLASS SUBSTRATE
- 108:: PARALLAX BARRIERS
- 109:: PIXELS USED FOR DISPLAY FOR LEFT SIDE (THE PASSENGER SEAT SIDE)
- 110:: PIXELS USED FOR DISPLAY FOR RIGHT SIDE (THE DRIVER SEAT SIDE)
- 111:: DISPLAY-PANEL DRIVING UNIT
- 112:: SCAN-LINE DRIVING CIRCUIT
- 113:: DATA-LINE DRIVING CIRCUIT
- 114:: TFT ELEMENT
- 115-118:: DATA LINES
- 119-121:: SCAN LINES
- 122:: PIXEL ELECTRODE
- 123:: SUB-PIXEL
- 124:: TOUCH PANEL
- 200:: CONTROL UNIT
- 201:: COMPACT DISK(CD)/MINIDISC(MD) PLAYING UNIT
- 202:: RADIO-BROADCAST RECEIVING UNIT
- 203:: TELEVISION (TV) RECEIVING UNIT
- 204:: DIGITAL VERSATILE DISK (DVD) PLAYING UNIT
- 205:: HARD DISK (HD) PLAYING UNIT
- 206:: NAVIGATION UNIT
- 207:: DISTRIBUTING CIRCUIT
- 208:: FIRST-IMAGE ADJUSTING CIRCUIT
- 209:: SECOND-IMAGE ADJUSTING CIRCUIT
- 210:: AUDIO ADJUSTING CIRCUIT
- 211:: IMAGE OUTPUT UNIT
- 212:: VEHICLE INFORMATION AND COMMUNICATION SYSTEM (VICS) INFORMATION RECEIVING UNIT
- 213:: GLOBAL POSITIONING SYSTEM (GPS) INFORMATION RECEIVING UNIT
- 214:: SELECTOR
- 215:: OPERATING UNIT
- 216:: REMOTE-CONTROL TRANSMITTING AND RECEIVING UNIT
- 217:: REMOTE CONTROL
- 218:: MEMORY
- 219:: EXTERNAL AUDIO/PICTURE INPUT UNIT
- 220:: CAMERA
- 221:: BRIGHTNESS DETECTING UNIT
- 222:: PASSENGER DETECTING UNIT
- 223:: REAR DISPLAY UNIT
- 224:: ELECTRONIC TOLL COLLECTION (ETC) IN-VEHICLE DEVICE
- 225:: COMMUNICATING UNIT
- 226:: FIRST WRITING CIRCUIT
- 227:: SECOND WRITING CIRCUIT
- 228:: VIDEO RANDOM ACCESS MEMORY (VRAM)
- 229:: INTERFACE
- 230:: CENTRAL PROCESSING UNIT (CPU)
- 231:: STORAGE UNIT
- 232:: DATA STORAGE UNIT
- 233:: FIRST SCREEN RAM
- 234:: SECOND SCREEN RAM
- 235:: IMAGE-QUALITY-SETTING-INFORMATION STORAGE UNIT
- 236:: ENVIRONMENT-ADJUSTING-VALUE STORING UNIT
- 325:: MULTI-VIEW DISPLAY UNIT
- 330:: IMAGING DEVICE
- 340:: DISPLAY CONTROL APPARATUS
- 341:: DATA RECORDING UNIT
- 342:: IMAGE ANALYZING UNIT
- 346:: PICTURE-SIGNAL-TRANSFORM PROCESSING UNIT
- 347:: PICTURE-SIGNAL SELECTING AND OUTPUT UNIT
- 348:: OPERATING UNIT
- 349:: TRANSFORM-FUNCTION RECORDING UNIT
- 1325:: MULTI-VIEW DISPLAY UNIT
- 1330:: IMAGING DEVICE
- 1340:: MULTI-VIEW DISPLAY APPARATUS
- 1341:: DATA RECORDING UNIT
- 1342:: IMAGE ANALYZING UNIT
- 1343:: DISPLAY CONTROL UNIT
- 1346:: VIEWING-DIRECTION SWITCHING UNIT
- 1348:: OPERATING UNIT
- 1350:: PICTURE-SIGNAL GENERATING UNIT
- 1351:: SOURCE-SIGNAL SELECTING AND OUTPUT UNIT
- 1352:: SOURCE-SIGNAL COMPRESSING UNIT
- 1353:: EDITING PROCESSING UNIT
- 1360:: VIEWING-DIRECTION SWITCHING MECHANISM
- 2301:: MULTI-VIEW DISPLAY APPARATUS
- 2302:: RADIOWAVE RECEIVING UNIT
- 2303:: DVD PLAYER
- 2340:: OPERATING UNIT
- 2341:: SOURCE-SIGNAL SELECTING UNIT
- 2342a,: 2342b: EDITING MEMORIES
- 2342c:: COMBINING EDITING UNIT (EMPHASIZED PORTION SELECTING UNIT)
- 2342d:: OUTPUT BUFFER
- 2343:: DISPLAY PROCESSING UNIT (EMPHASIZED DISPLAY PROCESSING UNIT)
- N:: NAVIGATION APPARATUS

### BEST MODE(S) FOR CARRYING OUT THE INVENTION

Exemplary embodiments of a display apparatus according to the present invention will be explained in detail below with reference to the accompanying drawings. The technical scope of the present invention is not limited to the exemplary embodiments described below. The technical scope of the prevent invention is defined by the inventions defined in the claims and the equivalents thereof.

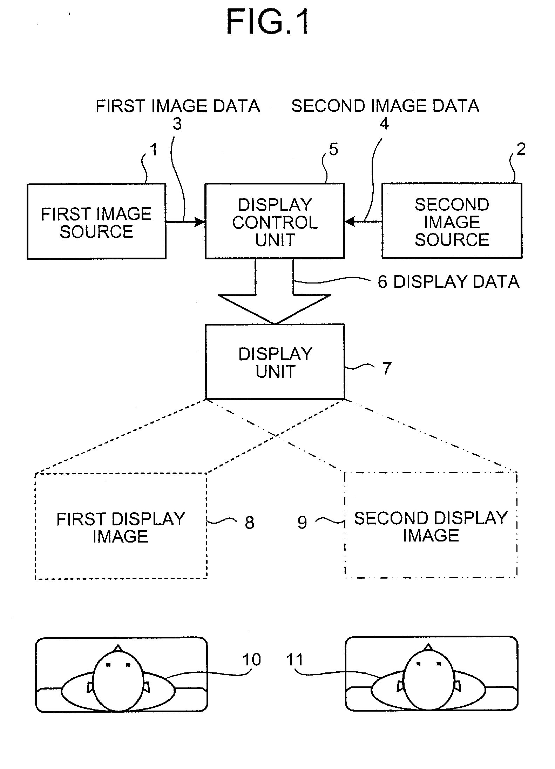

Fig. 1 is a conceptual drawing of a multi-view display apparatus (hereinafter, "display apparatus") according to an embodiment of the present invention. In the figure, 1 indicates a first picture source, 2 indicates a second picture source, 3 indicates first picture data from the first picture source, 4 indicates second picture data from the second picture source, 5 indicates a display control unit, 6 indicates display data, 7 indicates a display unit (e.g. a liquid crystal display panel), 8 indicates a first display image based on the first picture source 1, 9 indicates a second display image based on the second picture source 2, 10 indicates a viewer (a user) positioned on the left side of the display unit 7, and 11 indicates a viewer (a user) positioned on the right side of the display unit 7.

The drawing shown in Fig. 1 conceptually depicts that the viewer 10 and the viewer 11 are able to see, substantially at the same time, the first display image 8 and the second display image 9 respectively, according to the relative positions of the viewers 10 and 11 with respect to the display unit 7, in other words, according to their view angles with respect to the display unit 7. The drawing also conceptually depicts that each of the display images 8 and 9 can be seen on the entire display surface of the display unit 7. In Fig. 1, the first picture source 1 is, for example, a movie image from a DVD player or an image received by a television broadcast receiver. The second picture source 2 is, for example, a map or a route guidance image from a car navigation apparatus. The first picture data 3 and the second picture data 4 from these picture sources are supplied to, and processed by, the display control unit 5 so that these pieces of picture data can be displayed on the display unit 7, substantially at the same time.

The display unit 7 to which the display data 6 is supplied by the display control unit 5 is configured with a liquid crystal display panel or the like that has parallax barriers, which are explained later. A half of the total number of pixels arranged in the widthwise direction of the display unit 7 is used for displaying the first display image 8 based on the first picture source 1. The other half of the total number of pixels is used for displaying the second display image 9 based on the second picture source 2. The viewer 10 who is positioned on the left side of the display unit 7 is able to see only the pixels that correspond to the first display image 8. The viewer 10 is substantially not able to see the second display image 9 because the image is blocked by parallax barriers provided on the surface of the display unit 7. On the other hand, the viewer 11 who is positioned on the right side of the display unit 7 is able to see only the pixels that correspond to the second display image 9. The viewer 11 is substantially not able to see the first display image 8 because the image is blocked by the parallax barriers. The parallax barriers may be obtained by applying the technical features disclosed in, for example, Japanese Patent Application Laid-open No. H10-123461 and Japanese Patent Application Laid-open No. H11-84131.

With the configurations described above, it is possible to provide, on a single screen, mutually different pieces of information or mutually different contents to the users who are positioned on the left and on the right of the screen, respectively. Also, needless to say, if the first picture source and the second picture source are the same as each other, the user on the left and the user on the right are able to see the same image as each other, like with the conventional techniques.

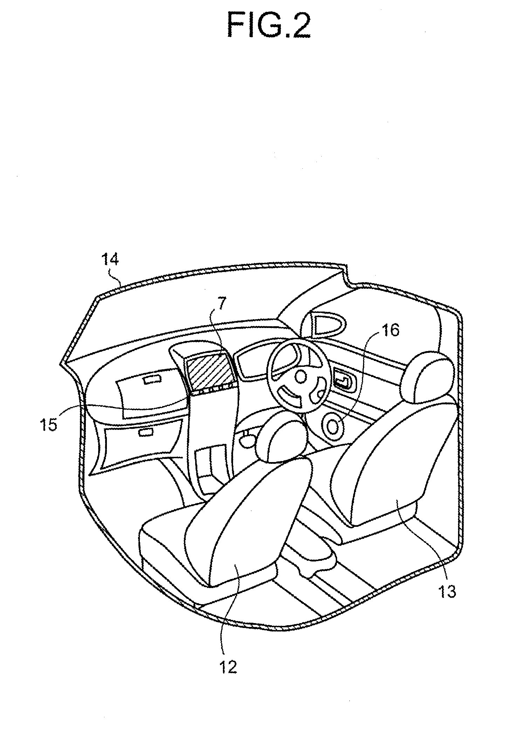

Fig. 2 is a perspective view of an example in which the display apparatus according to the one embodiment of the present invention is installed in a vehicle. In the figure, 12 indicates a passenger seat, 13 indicates a driver seat, 14 indicates a windshield, 15 indicates an operating unit, and 16 indicates a speaker.

The display unit 7 included in the display apparatus shown in Fig. 1 is provided in, for example, a dashboard area that is positioned substantially in the middle of the driver seat 13 and the passenger seat 12. Various types of operations for the display apparatus are performed by using a touch panel (not shown) that is integrally formed with the surface of the display unit 7 and the operating unit 15, or an infrared ray remote control or a wireless remote control (not shown). The speaker 16 is provided on each of the doors of the vehicle, so that audio and alarm sounds that are in conjunction with displayed images are output from the speakers 16.

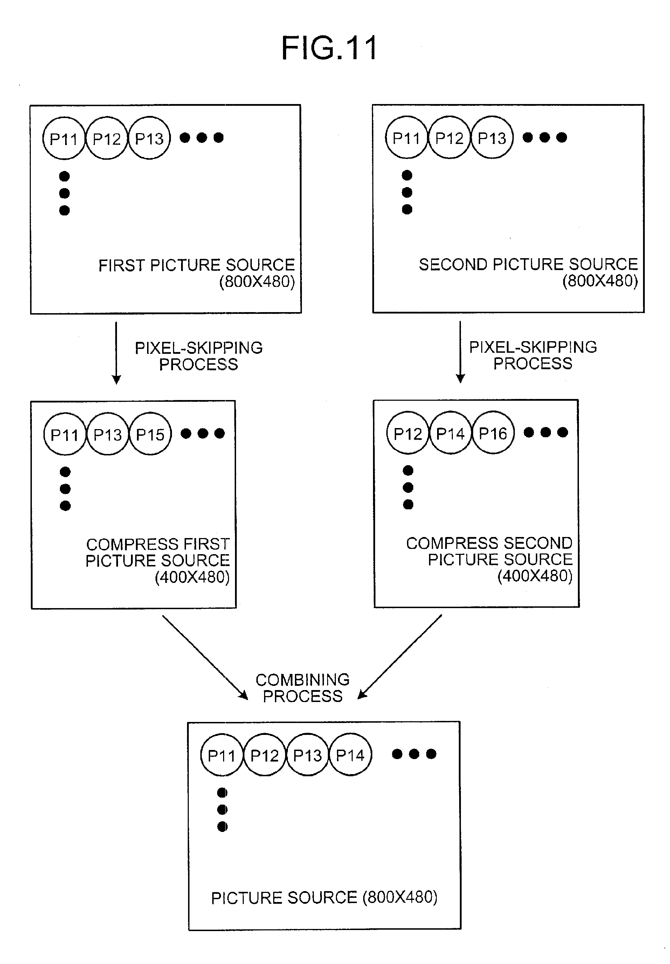

The viewer 11 shown in Fig. 11 sits in the driver seat 13, whereas the viewer 10 sits in the passenger seat 12. The image that can be seen from the first viewing direction (i.e., the driver seat side) with respect to the display unit 7 is a map or the like that is provided, for example, by a car navigation apparatus. The image that can be seen, substantially at the same time, from the second viewing direction (i.e., the passenger seat side) is, for example, a television broadcast reception image or a DVD movie image. Accordingly, while the driver who is sitting in the driver seat 13 is provided with driving assistance from the car navigation apparatus, the passenger who is sitting in the passenger seat 12 is able to enjoy TV or DVD at the same time. Also, both of the images are displayed by using the entire screen of, for example, a 7-inch display. Thus, the size of the images on the screen is not reduced, unlike a multi-window display realized by conventional techniques. In other words, pieces of information or contents that are respectively suitable for the driver and the passenger are provided, as if there were two exclusive-use displays that are independent of each other.

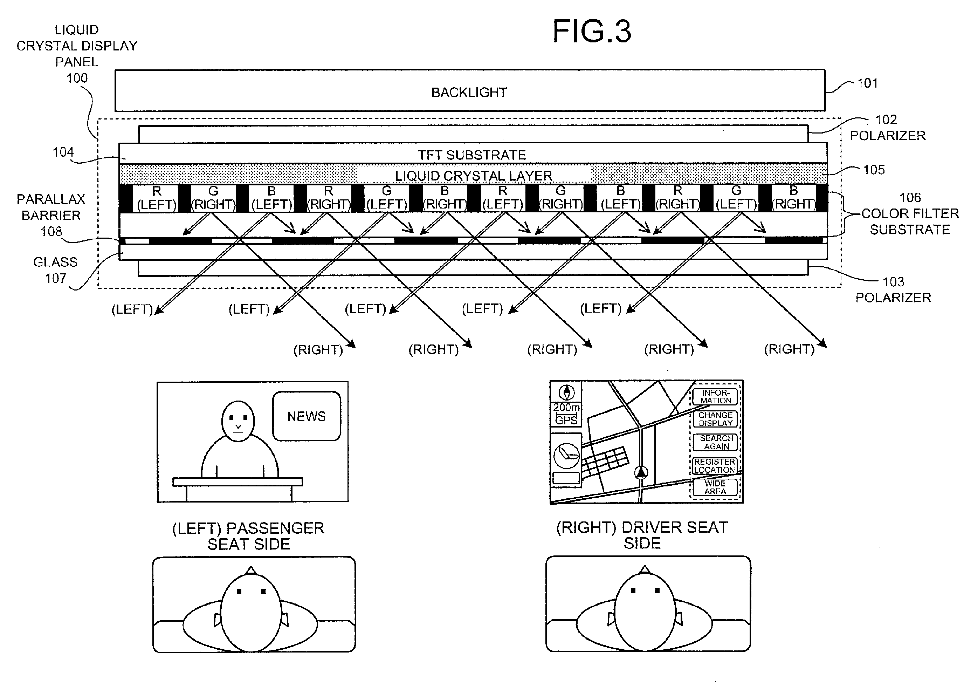

Fig. 3 is a schematic of a cross sectional structure of the display unit 7. In the figure, 100 indicates a liquid crystal display panel, 101 indicates a backlight, 102 indicates a polarizer provided on the backlight side of the liquid crystal display panel, 103 indicates a polarizer provided on the light emitting direction side in front of the liquid crystal display panel, 104 indicates a Thin Film Transistor (TFT) substrate, 105 indicates a liquid crystal layer, 106 indicates a color filter substrate, 107 indicates a glass substrate, and 108 indicates parallax barriers. The liquid crystal display panel 100 is configured to include a pair of substrates between which the liquid crystal layer 105 is interposed, the pair of substrates namely being the TFT substrate 104 and the color filter substrate 106 provided to oppose the TFT substrate 104, the parallax barriers 108 provided on the light emitting direction side in front of the pair of substrates, the glass substrate 107, and two polarizers 102 and 103 that have these elements interposed therebetween. The liquid crystal display panel 100 is disposed to have a small distance from the backlight 101. The liquid crystal display panel 100 has pixels that are made up of colors of red, green, and blue (i.e., RGB, or the three primary colors).

The pixels in the liquid crystal display panel 100 are subject to display control, while being divided into pixels used for the display for the left side (i.e., the passenger seat side) and pixels used for the display for the right side (i.e., the driver seat side). The pixels used for the display for the left side (the passenger seat side) are blocked by the parallax barriers 108 so that no display is made for the right side (i.e., the driver seat side) but the pixels can be viewed from the left side (i.e., the passenger seat side). Conversely, the pixels used for the display for the right side (the driver seat side) are blocked by the parallax barriers 108 so that no display is made for the left side (i.e., the passenger seat side) but the pixels can be viewed from the right side (i.e., the driver seat side). With this arrangement, it is possible to provide the mutually different displays to the driver and the passenger, respectively. In other words, it is possible to provide the driver with map information for navigation, and to provide the passenger with a movie recorded on a DVD or the like, at the same time. By changing the configurations of the parallax barriers 108 and the pixels in the liquid crystal display panel, it is also possible to display mutually different images in a plurality of directions, such as three directions. In addition, another arrangement is acceptable in which the parallax barriers themselves are configured with liquid crystal shutters or the like that can be driven electrically so that it is possible to change the view angle.

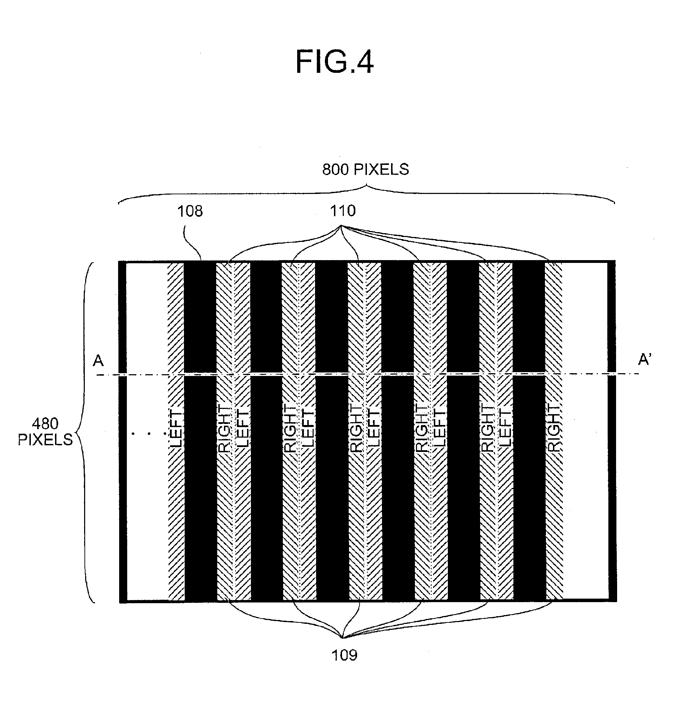

Fig. 4 is a schematic of a structure observed when the display panel is viewed from a directly opposite position. Fig. 3 is a cross sectional view at line A-A' in Fig. 4. In the figure, 109 indicates the pixels used for the display for the left side (i.e., the passenger seat side), whereas 110 indicates the pixels used for the display for the right side (i.e., the driver seat side). In each of Fig. 3 and Fig. 4, a part of the liquid crystal display panel 100 in which 800 pixels are arranged in the widthwise direction and 480 pixels are arranged in the lengthwise direction is shown. The pixels 109 used for the display for the left side (i.e., the passenger seat side) and the pixels 110 used for the display for the right side (i.e., the driver seat side) are divided into groups in the lengthwise direction, and the groups are arranged to alternate. The parallax barriers 108 are disposed to have a predetermined interval therebetween in the widthwise direction and are arranged in the same fashion in the lengthwise direction. With this arrangement, when the display panel is viewed from the left side, the parallax barriers 108 cover and hide the pixels 110 used for the right side, so that it is possible to see the pixels 109 used for the left side. When the display panel is viewed from the right side, the parallax barriers 108 cover and hide the pixels 109 used for the left side so that it is possible to see the pixels 110 used for the right side. Further, from a position directly opposite the display and around it, because it is possible to see both the pixels 109 for the left side and the pixels 110 for the right side, both the display image for the left side and the display image for the right side are viewed while substantially overlapping each other. The groups of the pixels 109 for the left side and the groups of the pixels 110 for the right side that are arranged to alternate as shown in Fig. 4 have the colors of RGB as shown in Fig. 3; however, within each of the groups, each column in the lengthwise direction may have a single color to form R columns, G column, and B columns. Alternatively, each column may have the colors of RGB in a combined manner.

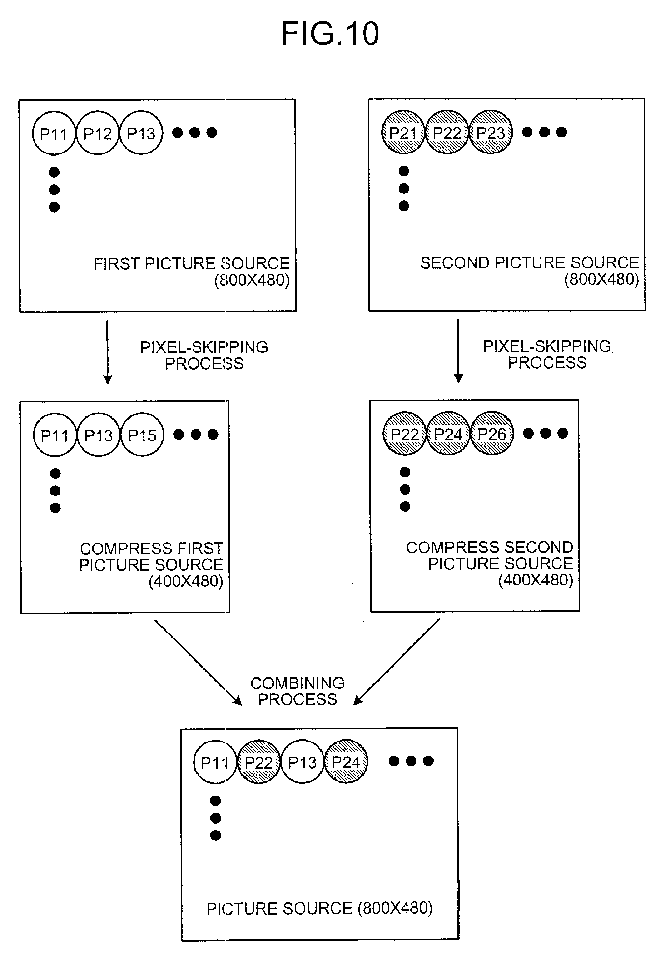

More specifically, for example, to have mutually different pictures displayed on the display unit 7 for the two directions, namely, for the right side (i.e., the driver seat side) and for the left side (i.e., the passenger seat side), the 800×480 pixels that constitute the source signals respectively corresponding to these two pictures are compressed to 400x480 pixels, so that the source signals are combined into picture signals that correspond to the number of pixels of the display unit 7, namely, 800x480 pixels. In this situation, as shown in Fig. 10, the source signal for the driver seat side is obtained by applying the technique of pixel-skipping the pixels in odd-numbered columns (i.e., the first column, the third column, and so on) from the source signal that is supposed to be used for displaying the picture. The source signal for the passenger seat side is obtained by applying the technique of pixel-skipping the pixels in even-numbered columns (the second column, the fourth column, and so on) from the source signal that is supposed to be used for displaying the picture. However, the method of pixel-skipping the pixels is not limited to this example. It is acceptable to thin out pixels from odd-numbered columns and even-numbered columns, in units of R, G, and B elements that make up each of the pixels. A combining process is performed on the picture sources that have been compressed in the pixel-skipping process so that the columns alternate, and thus the final picture source is generated.

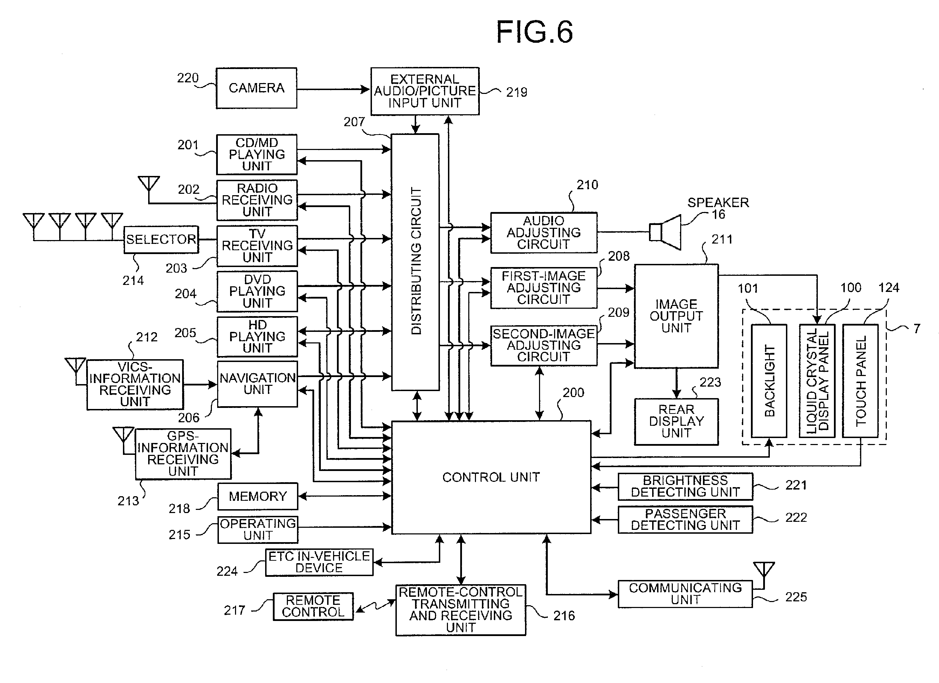

When the picture displayed on the display unit is viewed from the right side (i.e., the driver seat side), for example, there is a possibility that the picture resulting from the pixels 109 for the left side that is supposed to be covered and hidden by the parallax barriers 108 shown in Fig. 4 may slightly fail to be blocked by the parallax barriers 108, depending on the viewing position of the driver shown in Fig. 1. Similarly, when the picture displayed on the display unit is viewed from the left side (i.e., the passenger seat side), there is a possibility that the picture resulting from the pixels 110 for the right side that is supposed to be covered and hidden by the parallax barriers 108 may slightly fail to be blocked by the parallax barriers 108, depending on the viewing position of the passenger. To cope with this problem, the display apparatus includes a control unit (shown with a reference numeral 200 in Fig. 6) that adjusts and displays, for example, the picture to be displayed for the left side (i.e., the passenger seat side) to improve the quality level of the picture displayed for the right side (i.e., the driver seat side).

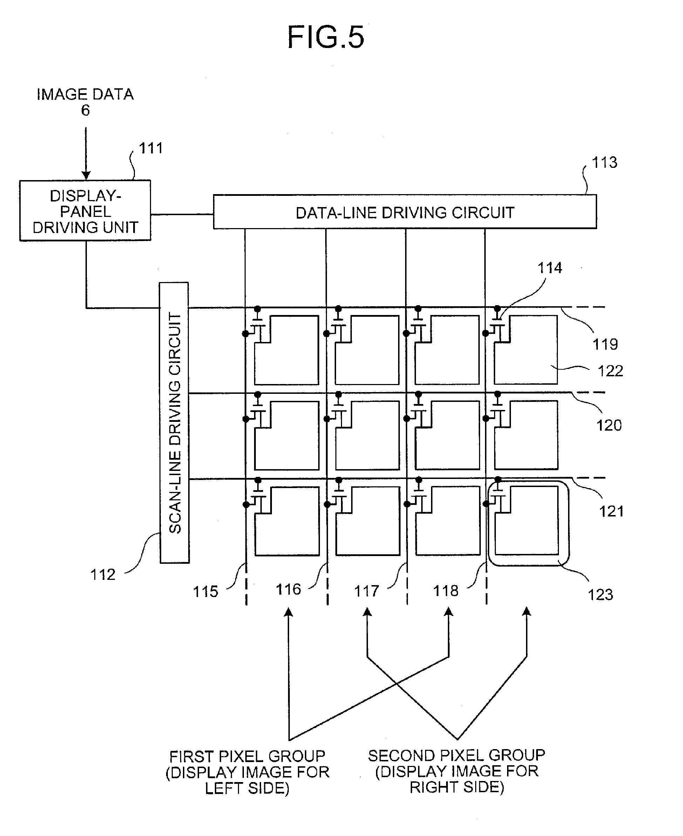

Fig. 5 is a schematic circuit diagram of the TFT substrate 104. In the figure, 111 indicates a display-panel driving unit, 112 indicates a scan-line driving circuit, 113 indicates a data-line driving circuit, 114 indicates a TFT element, 115-118 indicates data lines, 119-121 indicates scan lines, 122 indicates a pixel electrode, and 123 indicates a sub-pixel.

As shown in Fig. 5, a plurality of sub-pixels 123 are formed. Each of the sub-pixels 123 corresponds to a different one of areas defined by the data lines 115-118 and the scan lines 119-121. One pixel electrode 122 that applies a voltage to the liquid crystal layer 105 and one TFT element 114 that controls the switching of the pixel electrode 122 are provided in each of the sub-pixels 123. The display-panel driving unit 111 controls driving timing of the scan-line driving circuit 112 and the data-line driving circuit 113. The scan-line driving circuit 112 selectively scans the TFT elements 114. The data-line driving circuit 113 controls voltages applied to the pixel electrodes 122.

In the sub-pixels 123, a first group of image data for displaying a first image and a second group of image data for displaying a second image are formed by, for example, transmitting first pixel data (used for displaying the image for the left side) to the data lines 115 and 117 and second pixel data (used for displaying the image for the right side) to the data lines 116 and 118, based on data obtained by combining the first image data and the second image data or based on both the first image data and the second image data.

Fig. 6 is a block diagram of main parts of the display apparatus according to the present invention. In the example shown in the figure, the present invention is applied to a so-called Audio Visual Navigation multifunction product. In the figure, 124 indicates a touch panel, 200 indicates the control unit, 201 indicates a CD/MD playing unit, 202 indicates a radio-broadcast receiving unit, 203 indicates TV receiving unit, 204 indicates a DVD playing unit, 205 indicates Hard Disk (HD) playing unit, 206 indicates a navigation unit, 207 indicates a distributing circuit, 208 indicates a first-image adjusting circuit, 209 indicates a second-image adjusting circuit, 210 indicates an audio adjusting circuit, 211 indicates an image output unit, 212 indicates a Vehicle Information and Communication System (VICS)-information receiving unit, 213 indicates a Global Positioning System (GPS)-information receiving unit, 214 indicates a selector, 215 indicates an operating unit, 216 indicates a remote-control transmitting and receiving unit, 217 indicates a remote control, 218 indicates a memory, 219 indicates an external audio/picture input unit, 220 indicates a camera, 221 indicates a brightness detecting unit, 222 indicates a passenger detecting unit, 223 indicates a rear display unit, 224 indicates an Electronic Toll Collection (ETC) in-vehicle device, and 225 indicates a communicating unit.

The display unit 7 includes the touch panel 124, the liquid crystal display panel 100, and the backlight 101. As explained above, on the liquid crystal display panel 100 included in the display unit 7, it is possible to display, substantially at the same time, an image to be viewed from the driver seat side being the first viewing direction and another image to be viewed from the passenger seat side being the second viewing direction. Instead of the liquid crystal display panel, it is acceptable to use another type of flat panel display in the display unit 7. The examples include: an organic electroluminescence (EL) display panel, a plasma display panel, and a cold cathode flat panel display.

As for the control unit 200, images and audio from the various sources (e.g. the CD/MD playing unit 201, the radio-broadcast receiving unit 202, the TV receiving unit 203, the DVD playing unit 204, the HD playing unit 205, and the navigation unit 206) are distributed so that the images are input to the first-image adjusting circuit 208 and the second-image adjusting circuit 209 whereas the audio is input to the audio adjusting circuit 210, via the distributing circuit 207 that distributes a picture source designated for the left side to the first-image adjusting circuit 208 and a picture source designated for the right side to the second-image adjusting circuit 209, according to an instruction from the control unit 200. The luminance, the color tone, and the contrast of the images are adjusted by the first-image adjusting circuit 208 and the second-image adjusting circuit 209. The adjusted images are output by the image output unit 211 to be displayed on the display unit 7. Also, the audio adjusting circuit 210 adjusts distribution of audio to the speakers, the sound volume, and the sound. The adjusted audio is output from the speakers 16.

The control unit 200 adjusts the image for the left side to improve the picture quality level for the right side, in a situation where, for example, doubled pictures are caused because the picture for the left side fails to be blocked by the parallax barriers and overlaps the picture for the right side (i.e., the driver seat side). As a more specific example, the control unit 200 is operable to exercise control by switching the distributing circuit 207 so that the first picture source that corresponds to the left side (i.e., the passenger seat side) has the same source signal as the second picture source that corresponds to the right side (i.e., the driver seat side). In such a situation, as shown in Fig. 11, the picture itself that corresponds to the second picture source is displayed as the picture to be viewed from the right side (i.e., the driver seat side). Thus, the image quality is improved. As another specific example, the control unit 200 is operable to exercise control so that the first picture source that corresponds to the left side (i.e., the passenger seat side) is blocked, so that the first-image adjusting circuit 208 generates a single-color picture signal. In such a situation, the picture displayed for the left side that fails to be blocked by the parallax barriers is in a single color. Thus, the picture to be viewed from the left side (i.e., the passenger seat side) becomes static. Thus, it is possible to prevent the picture displayed for the right side from flickering, which means that the luminance and the colors fluctuate. As a result, it is possible to improve the quality level of the picture displayed for the right side.

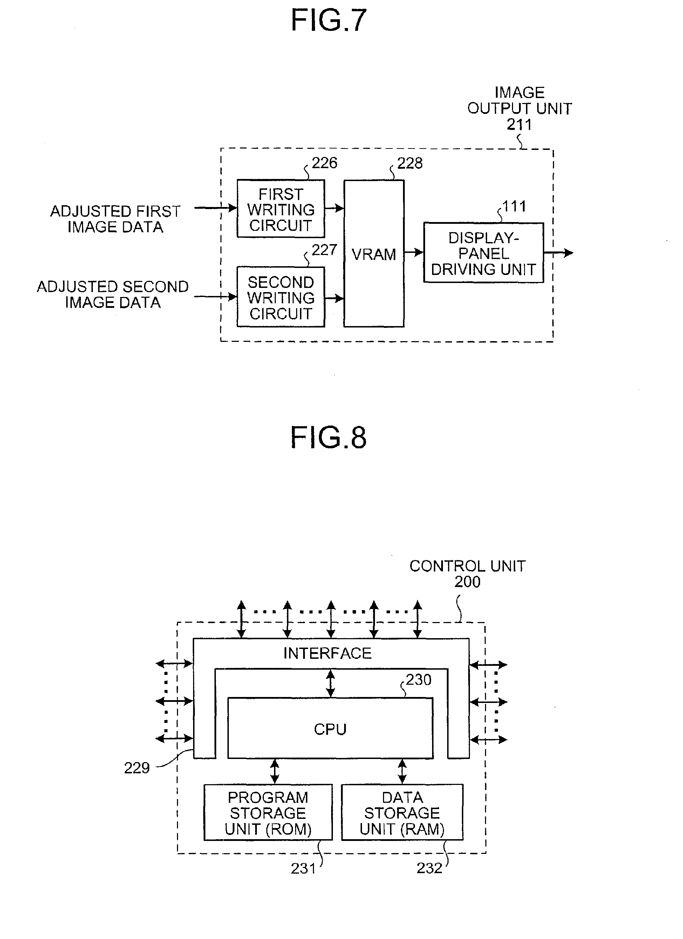

Fig. 7 is a schematic block diagram of the image output unit 211. In the figure, 226 indicates a first writing circuit, 227 indicates a second writing circuit, and 228 indicates a Video Random Access Memory (VRAM).

The image output unit 211 includes, as shown in Fig. 7 for example, the first writing circuit 226, the second writing circuit 227, the VRAM 228, and the display-panel driving unit 111. For example, the first writing circuit 226 writes, out of the adjusted image data, the image data (i.e., the image data for the first display image 8 shown in Fig. 1) that corresponds to the odd-numbered columns of the image output from the first-image adjusting circuit 208 into corresponding areas of the VRAM 228. The second writing circuit 227 writes, out of the adjusted image data, the image data (i.e., the image dada for the second display image 9 shown in Fig. 1) that corresponds to the even-numbered columns of the image output from the second-image adjusting circuit 209 into corresponding areas of the VRAM 228. The display-panel driving unit 111 is a circuit that drives the liquid crystal display panel 100. The display-panel driving unit 111 drives corresponding ones of the pixels in the liquid crystal display panel 100 based on the image data (i.e., combined data resulting from the first image data and the second image data) that is stored in the VRAM 228. Because the image data that has been written in the VRAM 228 in correspondence with the images that are for the multi-view display and have been obtained by combining the first image data and the second image data, it is sufficient to have only one driving circuit. The operation of the driving circuit is the same as that of any driving circuit used in a normal liquid crystal display apparatus. Alternatively, it is acceptable to use a first display panel driving circuit and a second display panel driving circuit that each drive corresponding ones of the pixels in the liquid crystal display panel, based on corresponding pieces of image data, without having the first image data and the second image data combined with each other.

To explain one of the examples of the various sources shown in Fig. 6, when the HD playing unit 205 is selected, music data such as a Moving Picture Experts Group [MPEG] Audio Layer 3 (MP3) file, image data such as a Joint Photographic Experts Group (JPEG) file, or map data used for navigation is read from the Hard Disk (HD), so that a menu or image data used for selecting music data is displayed on the display unit 7.

The navigation unit 206 includes a map information storage unit that stores therein map information used for navigation. The navigation unit 206 obtains information from the VICS-information receiving unit 212 and the GPS-information receiving unit 213, generates an image used in a navigation operation, and displays the generated image. The TV receiving unit 203 receives an analog TV broadcast wave and a digital TV broadcast wave from an antenna, via the selector 214.

Fig. 8 is a schematic block diagram of the control unit 200. In the figure, 229 indicates an interface, 230 indicates a Central Processing Unit (CPU), 231 indicates a storage unit, and 232: a data storage unit.

The control unit 200 controls the distributing circuit 207 and the various sources so that pictures are displayed for two selected sources or one selected source. The control unit 200 also causes the display unit 7 to display an operation menu used for controlling the various sources. As shown in Fig. 8, the control unit 200 is configured with a microprocessor or the like. The control unit 200 includes the CPU 230 that controls the constituent elements of, and the circuits in, the display apparatus via the interface 229. The CPU 230 includes the program storage unit 231 being made up of a Read-Only Memory (ROM) that stores therein various types of programs that are necessary for the operation of the display apparatus, and the data storage unit 232 being made up of a Random Access Memory (RAM) that stores therein various types of data. The ROM and the RAM may be built into the CPU or may be provided on the outside of the CPU. The ROM may be a non-volatile memory that is electrically rewritable, such as a flash memory.

Users are able to control the various sources by using the touch panel 124 attached to the surface of the display unit 7 or switches provided on the surroundings of the display unit 7. Users are also able to perform input operations and selecting operations including audio recognition by using the operating unit 215. The users may perform the input operations and the selecting operations by using the remote control 217 via the remote-control transmitting and receiving unit 216. The control unit 200 exercises controls over various elements including the various sources, according to the operation performed on the touch panel 124 or the operating unit 215. The control unit 200 is also configured to be able to control the sound volume of each of the speakers 16 provided in the vehicle as shown in Fig. 2, by using the audio adjusting circuit 210. The control unit 200 also stores various setting information including image quality setting information, programs, vehicle information into the memory 218.

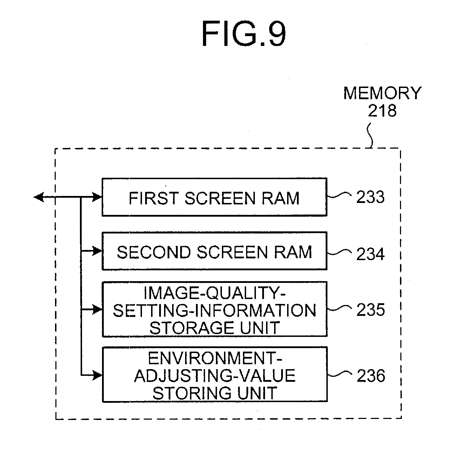

Fig. 9 is a schematic block diagram of the memory 218. In the figure, 233 indicates a first screen RAM, 234 indicates a second screen RAM, 235 indicates an image-quality-setting-information storage unit, and 236 indicates an environment-adjusting-value storing unit.

For example, as shown in Fig. 9, the memory 218 includes the first screen RAM 233 and the second screen RAM 234 into which it is possible to write image quality adjusting values for the first image and the second image, respectively, that have been set by the users. The memory 218 also includes the image-quality-setting-information storage unit 235 that stores therein, in advance, image quality adjusting values having a plurality of levels that are used for the image quality adjustment purposes and serve as pre-set values that can be read when the image quality levels of the first image and the second image need to be adjusted. The memory 218 further includes the environment-adjusting-value storing unit 236 that stores therein adjusting values for the image quality levels of the first picture and the second picture with respect to the surrounding environment so that the image quality is adjusted in correspondence with changes in the surrounding environment, such as changes in the brightness on the outside of the vehicle. Each of the image-quality-setting-information storage unit 235 and the environment-adjusting-value storing unit 236 is configured with a non-volatile memory that is electrically rewritable, such as a flash memory, or a volatile memory having a battery backup.

Additionally, an arrangement is acceptable in which an image obtained by the vehicle rear monitoring camera 220 that is connected to the external audio/image input unit 219 is also displayed on the display unit 7. Besides the vehicle rear monitoring camera 220, a video camera or a game machine may be connected to the external audio/image input unit 219.

The control unit 200 is able to change the settings related to, for example, a localization position of the audio, based on the information detected by the brightness detecting unit 221 (e.g. the light switch of the vehicle or a light sensor) or the passenger detecting unit 222 (e.g. a pressure sensor provided in the driver seat or the passenger seat).

The reference numeral 223 denotes the rear display unit that is provided for the backseat of the vehicle. The rear display unit 223 is operable to display, via the image output unit 211, the same image as the one that is displayed on the display unit 7, or one of the image for the driver seat and the image for the passenger seat.

The control unit 200 is also operable to have toll information output from the ETC in-vehicle device 250 displayed. Also, the control unit 200 may control the communicating unit 225 used for establishing a wirelessly connection to a mobile phone or the like, to have information related to the communicating unit 225 displayed.

A specific example of the display control apparatus according to an embodiment of the present invention will be explained, by using a multi-view display apparatus installed in a vehicle as an example. When there is a priority relationship among mutually independent pictures, the display control apparatus according to the one embodiment of the present invention adjusts, to improve the picture quality level of one of the pictures that is displayed for a first viewing direction and has a higher priority, the other one or more of the pictures displayed for the other one or more of the viewing directions. When the contents of the mutually independent pictures are the same as each other, the display control apparatus controls the displaying elements and the parallax barriers so that it is possible to view the picture from a direction positioned between any two of the viewing directions that are positioned adjacent to each other. In addition, when one or more viewers are viewing one of the pictures from only one direction, or when only the picture displayed for one of the viewing direction is necessary, the display control apparatus realizes an emphasized display that has a high visibility, by taking advantage of, conversely, a disadvantage caused by doubled pictures.

In the following sections, to simplify the explanation, the following three exemplary embodiments will be explained individually: an exemplary embodiment in which, to improve the picture quality level of one of the pictures having a higher priority, the other one or more pictures that are displayed for the other one or more of the viewing directions are adjusted (a first embodiment of the present invention); another exemplary embodiment in which, visibility for the viewing from a direction positioned in-between is improved, when the contents of the mutually independent pictures are the same as each other (a second embodiment of the present invention); and yet another exemplary embodiment in which doubled pictures are utilized as an emphasized display.

### FIRST EMBODIMENT

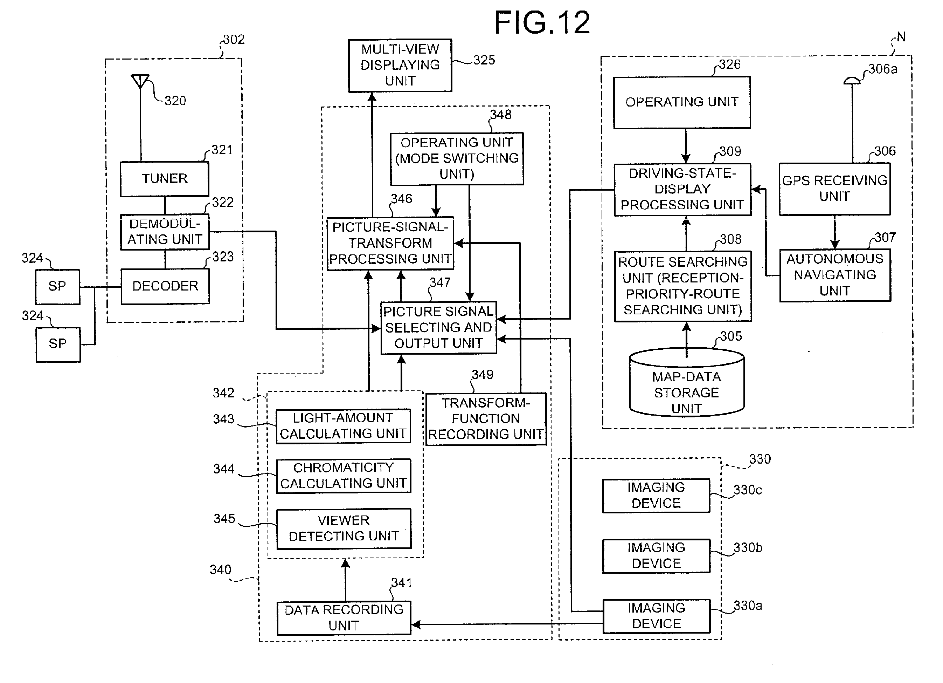

According to a first embodiment of the present invention, as shown in Fig. 12, the vehicle is equipped with a navigation apparatus N that guides a vehicle to a destination, a radiowave receiving unit 302 that receives digital terrestrial broadcasting, a multi-view display unit 325 that is operable to display, at the same time, a display image from the navigation apparatus N and a display image from the radiowave receiving unit 302, a display control apparatus 340 that controls the display of the multi-view display unit 325, imaging devices 330 that are used for a security purpose, and the like. The multi-view display unit 325 and the display control apparatus 340 constitute a display apparatus.

The navigation apparatus N includes a map-data storage unit 305 that stores therein road map data, a GPS receiving unit 306 that recognizes positional information of the vehicle in which the navigation apparatus N is installed, a GPS antenna 306a, an autonomous navigating unit 307 that manages a driving state of the vehicle, a route searching unit 308 that searches a route to a specified destination, based on the map data, a driving-state-display processing unit 309 that displays a driving position of the vehicle on a map, and an operating unit 326 that sets various kinds of operation modes and operating conditions. The navigation apparatus N has a navigation function to guide the vehicle to the specified point of location, the navigation function including one or more CPUs, a ROM that stores therein operation programs for the CPUs, and a RAM that is used as a working area and being configured so that the functional blocks therein are controlled.

The radiowave receiving unit 302 is configured with a digital television receiver that includes a receiving antenna 320, a tuner 321 that selects one of transmission channels (i.e., frequency bands) received via the receiving antenna 320, an Orthogonal Frequency-Division-Multiplexing (OFDM) demodulating unit 322 that takes out a digital signal from a received signal in the selected channel, performs an error correcting process, and outputs a Transport Stream (TS) packet, a decoder 323 that decodes an audio signal out of a picture/audio packet within the TS packet and outputs the decoded audio signal to a speaker 324 and also decodes a picture signal out of the picture/audio packet within the TS packet and outputs the decoded picture signal to the display unit 325.

A plurality of imaging devices 330 are provided in the vehicle. Imaging devices 330b and 330c that are disposed on the outside of the vehicle can be used for a vehicle-rear monitor or for measuring an inter-vehicle distance. An imaging device 330a that is disposed on the inside of the vehicle is used for a security purpose such as crime prevention. The imaging device 330a is located at a position from where it is possible to monitor the passenger seat to function also as a viewer detecting sensor, an illuminance detecting sensor, and a color detecting sensor.

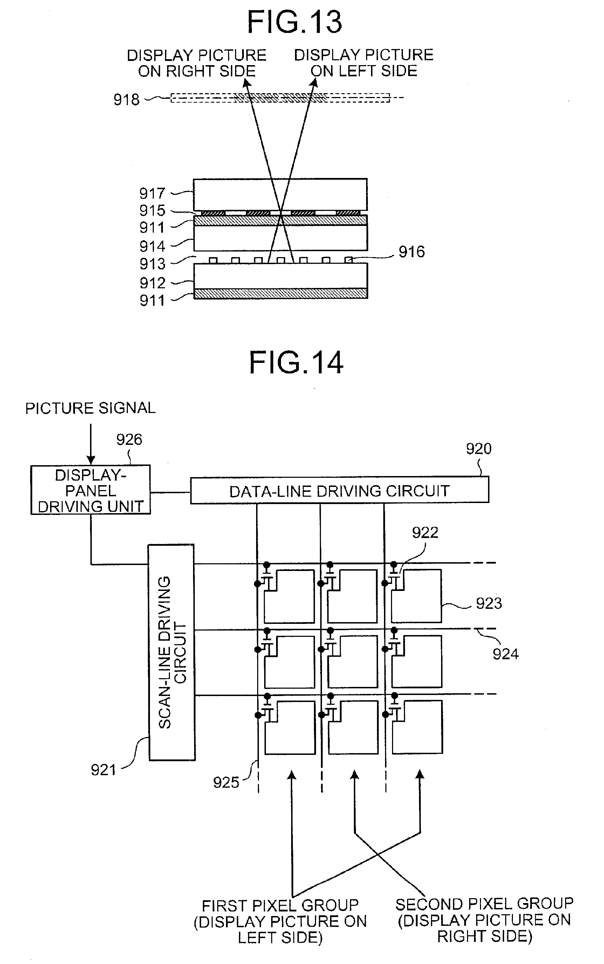

As shown in Fig. 13, the multi-view display unit 25 is configured by integrally forming a liquid crystal display panel and a parallax barrier substrate 917. The liquid crystal display panel includes: a pair of substrates between which a liquid crystal layer 913 is interposed, the pair of substrates namely being a TFT substrate 912 on which a TFT array 916 is formed and an opposing substrate 914 that is disposed to oppose the TFT substrate 912, and a pair of polarizers 911 that have the pair of substrates interposed therebetween. The parallax barrier substrate 917 includes a micro-lens and a parallax barrier layer 915 that has light-blocking slits.

In the TFT array 916, as shown in Fig. 14, a plurality of pixels are formed. Each of the pixels corresponds to a different one of areas defined by data lines 925 and scan lines 924. One pixel electrode 923 that applies a voltage to the liquid crystal layer 913 and one TFT element 922 that controls the switching of the pixel electrode 923 are provided in each of the pixels. A scan-line driving circuit 921 selectively scans the TFT elements 922. A data-line driving circuit 920 controls voltages applied to the pixel electrodes 923. A display-panel driving unit 926 controls driving timing of the scan-line driving circuit 921 and the data-line driving circuit 920.

The pixels are divided into two pixel groups, namely, a first pixel group and a second pixel group that are arranged (grouped into odd-numbered columns and even-numbered columns) to alternate (i.e., to correspond to every other data line). The first pixel group and the second pixel group are driven independently of each other, based on picture signals that have mutually different sources. Light beams that have passed through the first pixel group and the second pixel group are guided into mutually different directions by the parallax barrier layer 915, respectively, or some of the light beams in specific directions are blocked. Thus, it is possible to display mutually different pictures for the mutually different directions only at positions near a display plane 918 in the open space. The two pixel groups do not have to be arranged to alternate. It is acceptable to arrange the two pixel groups in any other way as long as they are arranged in a distributed manner within the screen.

The multi-view display unit 325 is provided on a front panel in the middle of the driver seat and the passenger seat. The multi-view display unit 325 is configured to be able to display pictures in such a manner that the picture viewed from the driver seat side and the picture viewed from the passenger seat side are different from each other. For example, picture information from the radiowave receiving unit 2 is viewed from the passenger seat side, whereas it is possible to use the display apparatus as a display device for the navigation apparatus N on the driver seat side.

The display control apparatus 340 includes, as shown in Fig. 12, a data recording unit 341 that records therein image capture data including data from an area near the passenger seat obtained by the imaging device 330a, an image analyzing unit 342 that analyzes an environment in which the multi-view display unit 325 is installed and whether there is any viewer, a picture-signal-transform processing unit 346 that performs a transform to generate a picture signal used for driving the pixel groups in the multi-view display unit 325, a picture-signal selecting and output unit 347 that selects an appropriate source signal out of a plurality of source signals, an operating unit 348 that specifies the source signal selected by the picture-signal selecting and output unit 347 and also functions as a mode switching unit, which is described later, and a transform-function recording unit 349.

The image analyzing unit 342 includes an illuminance detecting unit 343 that analyzes image data stored in the data recording unit 341 and calculates a brightness level of the inside of the vehicle, a color detecting unit 344 that calculates a color (of interior decoration or the like) on the inside of the vehicle, and a viewer detecting unit 345 that judges whether any viewer is sitting in the passenger seat, along with the driver.

The operating unit 348 is an operating panel that is used by the driver or a passenger for selecting a content to be displayed as each of the two pictures displayed on the multi-view display unit 325, from among a guidance display from the navigation apparatus N, a TV picture display received by the radiowave receiving unit 302, or an image display from the imaging device that monitors the rear of the vehicle. The picture-signal selecting and output unit 47 selects picture signals based on the selections made on the operating unit 348 and outputs the selected picture signals to the multi-view display unit 325.

The picture-signal-transform processing unit 346 adjusts the picture signals based on a transform function stored in the transform-function recording unit 349, when it is desired to improve the display quality (i.e., display performance) by mainly focusing on only one of the two pictures that are to be displayed on the multi-view display unit 325.

Doubled pictures that are experienced during a dual-view display are caused when it is not possible to completely separate the displays of the two mutually different pictures from each other. In other words, the picture display of one of the pixel groups is exhibited to be viewed as slightly overlapping the other picture display of the other pixel group. To analyze such a situation, sensory evaluations were performed, and the results of the evaluations were as follows:

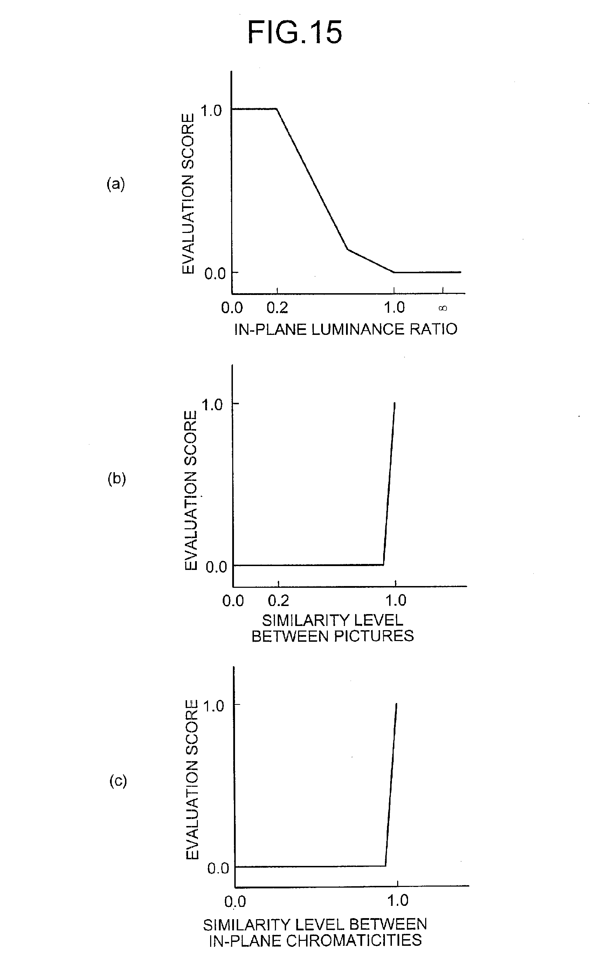

Shown in Fig. 15 are results of an evaluation performed on changes in the way doubled pictures were viewed when sets of mutually different pictures were displayed by the two pixel groups. The evaluation scores were obtained by calculating an average of scores of each of a plurality of arbitrary evaluators each of whom gave score "0" when doubled pictures were noticeable and gave a score "1" when doubled pictures were improved.

Shown in Fig. 15(a) are results of an evaluation performed by using, as a parameter, a ratio of an in-plane average luminance of a picture for one of the pixel groups to an in-plane average luminance of a picture for the other of the pixel groups (i.e., "the in-plane average luminance of the picture for one side"/"the in-plane average luminance of the picture for the other side"). Each in-plane average luminance was obtained by calculating a ratio between average values of input signals (i.e., luminance data signals) to the pixel groups used for displaying the pictures for the two directions, because it was difficult, due to the characteristics of the multi-view display unit 325, to directly measure the mutually different pictures displayed for the two directions under the same condition by using a luminance meter. The higher the in-plane average luminance of one of the pictures was, the more the doubled pictures were improved. In other words, the higher the in-plane average luminance of one of the pictures was, and also, the lower the in-plane average luminance of the other of the pictures was, the more the doubled pictures were improved. Ultimately, the results show that the doubled pictures were completely improved, when the in-plane average luminance of the other of the pictures was "0", in other words, when the display was in black. It should be noted, however, that another example in which the in-plane average luminance of the one of the pictures is high and the in-plane average luminance of the other of the pictures is low, besides the situation in which the other of the pictures is displayed in black, is a situation in which the other of the pictures is displayed in a single color. In other words, when the other of the pictures is displayed in a single color, it is possible to achieve an improvement effect. For example, when the other of the pictures is displayed in blue, it is possible to achieve a sufficient improvement effect.

Shown in Fig. 15(b) are results of an evaluation performed by using, as a parameter, a difference in the display contents between a picture for one of the pixel groups and a picture for the other of the pixel groups, in other words, by using a similarity level between the pictures as the parameter (which was expressed as 1.0 when the pictures were exactly the same as each other). The similarity level of the pictures was obtained by calculating a ratio between input signals for one of the pixel groups (i.e., a first pixel group) used for displaying one of the pictures and input signals for the other of the pixel groups (i.e., a second pixel group) used for displaying the other of the pictures at display pixel positions corresponding to the display pixel positions of the first pixel group, to calculate the ratio between the entire two pixel groups and to average the ratios. The results show that the doubled pictures were improved when the level of similarity was higher (i.e., when the pictures were the same as each other).

Shown in Fig. 15(c) are results of an evaluation performed by using an in-plane average chromaticity as a parameter. Like the evaluation results presented above, the results with the in-plane average chromaticity also show that the higher the level of similarity between the pictures displayed for the two directions were, the more the doubled pictures were improved.

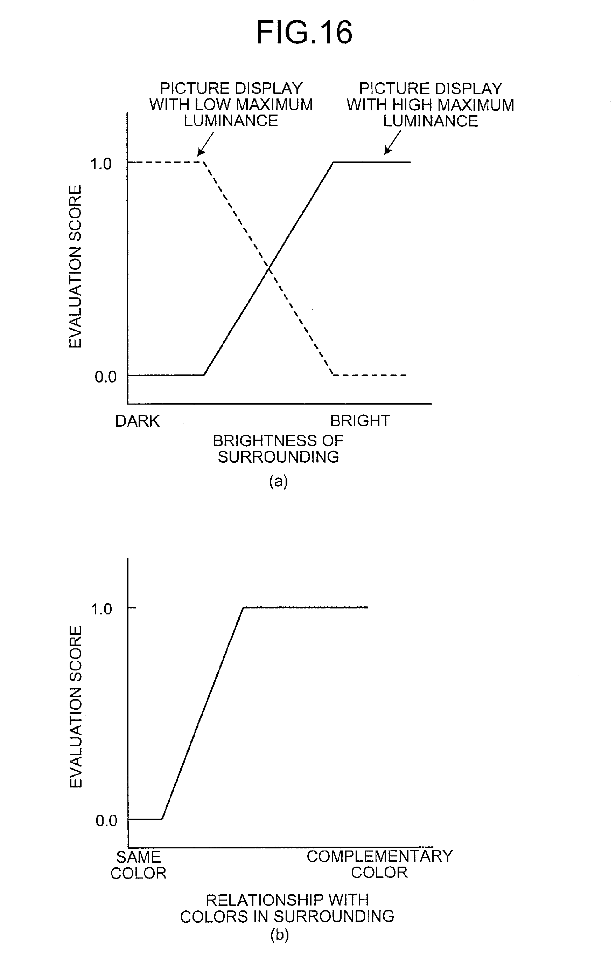

Shown in Fig. 16 are results of an evaluation performed on a relationship between the surrounding environment and the display quality (i.e., how easy it is to see the picture) by focusing on the display of only one of the pictures. In this evaluation, to focus on the display of only one of the pictures, the display of the other of the pictures was arranged to be under a condition that does not cause any doubled pictures. In the present example, the evaluation was performed by having the display of the other of the pictures in black. The evaluation method used was the same as the one described above, and a plurality of arbitrary evaluators gave evaluation scores.

Shown in Fig. 16(a) are results of an evaluation performed on how easy it is to see the picture with regard to the relationship between the brightness of the surroundings used as a parameter and the brightness (i.e., the maximum luminance) of the picture display. The brighter the surrounding was, the more highly the display quality was evaluated with a higher brightness level of the picture display. On the contrary, when the brightness level of the surroundings was low, the display quality was evaluated more highly with a lower brightness level of the picture display.

Shown in Fig. 16(b) are results of an evaluation performed on how easy it is to see a picture display, by using the color in the surroundings as a parameter. The evaluation results show that the closer the color in the surroundings was to the color of the picture display, the lower the evaluation result of the display quality was. Also, the evaluation results show that the stronger the complementary-color relationship was between the color in the surroundings and the color of the picture display, the higher the evaluation result of the display quality was.

Based on the relationship between the two picture signals, or based on the surrounding environment and the display quality, a transform function has been obtained by which it is possible to improve the display quality of only one of the two pictures displayed on the multi-view display unit 325.

More specifically, based on the picture signals or based on the surrounding environment and the display quality that are explained above, the picture-signal-transform processing unit 346 improves the display quality of only one of the two pictures that are displayed on the multi-view display unit 325.

The picture-signal-transform processing unit 346 also has a function to serve as a mode switching unit that selects one out of a number of modes defining whether the picture signal transform processing function should be turned on, depending on an operation performed on the operating unit 348. In one of the modes, the picture signal transform processing function does not work at all. In another one of the modes, the picture signal transform processing function works on one of the pictures according to a manual operation of a user. In yet another one of the modes, it is automatically judged whether a passenger is sitting in the passenger seat, and the picture signal transform processing function is automatically switched on so that the display quality of the picture on the driver seat side is improved. In yet another one of the modes, it is automatically judged whether the driver is currently driving the vehicle (i.e., whether the vehicle is running), and the picture signal transform processing function is automatically switched on so that the display quality of the picture on the passenger seat side is improved.

When the mode in which the picture signal transform processing function does not work at all is selected, and also if there is a viewer both in the driver seat and in the passenger seat, no transform process is performed on the picture signals that are input to the two pixel groups by the picture-signal-transform processing unit 346, but the display apparatus is driven in a normal fashion where standard multi-view pictures are output for the two directions. In other words, the picture-signal selecting and output unit 347 that controls the display in this mode serves as a first driving mode control unit that drives the first pixel group and the second pixel group independently of each other, based on the picture signals having mutually different sources.

The picture-signal-transform processing unit 346 and the transform-function recording unit 349 that perform high-quality display control on one of the pictures according to a manual operation by a user and that automatically perform high-quality display control on one of the pictures when there is no viewer in one of the driver seat and the passenger seat serve as a second driving mode control unit that drives one of the first pixel group and the second pixel group so that the quality level of the picture displayed by one of the first pixel group and the second pixel group. The operating unit 348 serves as a mode switching unit. In other words, the second driving mode control unit and the mode switching unit serve as a control unit that adjusts and displays, to improve the picture quality level of one of the pictures displayed for one of the viewing directions, the other one or more of the pictures displayed for the other one or more of the viewing directions.

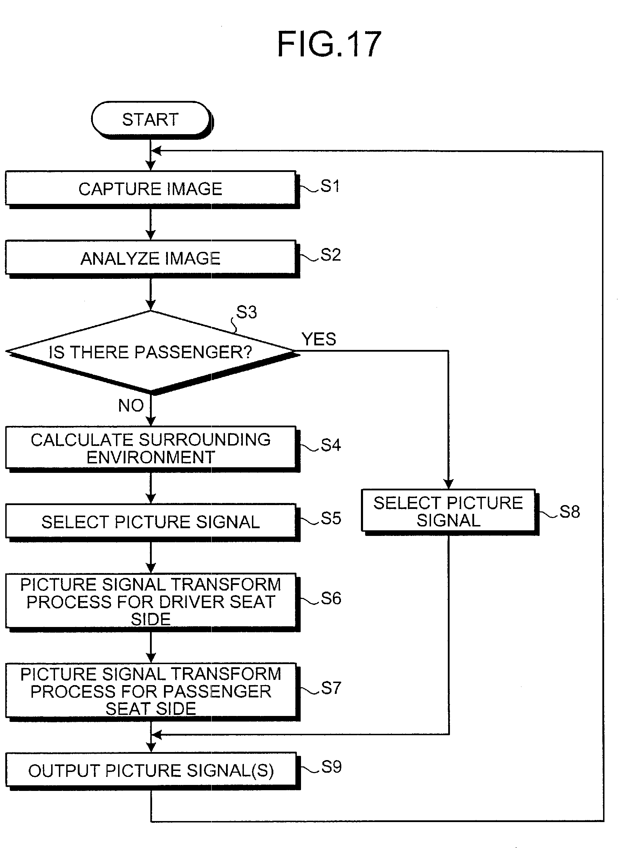

Next, the mode in which it is automatically judged whether there is anyone sitting in the passenger seat, and the function is automatically switched so that the display quality of the picture on the driver seat side is improved will be explained with reference to a flowchart shown in Fig. 17. An image is captured by the imaging device 330a (step S1). The image analyzing unit 342 analyzes the image based on image data that is obtained from an area in the vehicle near the passenger seat and is stored in the data recording unit 341 (step S2). When the viewer detecting unit 345 has judged that there is a person sitting in the passenger seat (step S3), the picture-signal selecting and output unit 47 selects a picture signal of a content that has been selected by the operating unit 348 (step S8). The selected picture signal is output to the display pixel group for the passenger seat side included in the multi-view display unit 325. An image for the navigation purpose is output to the display pixel group for the driver seat side (step S9).

In this situation, when the viewer detecting unit 345 has judged that there is no one sitting in the passenger seat (step S3), the brightness level and the color of the surroundings are calculated based on the image capture data (step S4). When the picture signal of a content that has been specified on the operating unit 348 is selected by the picture-signal selecting and output unit 347 (step S5), the picture-signal-transform processing unit 346 performs a color correction and a luminance adjustment to obtain the most appropriate maximum luminance judged from the surrounding environment, on the picture signal used for the display for the driver seat side (step S6). A picture signal that is substantially the same as the picture signal used for the display for the driver seat side is selected as a picture signal used for the display for the passenger seat side, so that the picture displayed for the driver seat side does not get doubled with another picture (step S7). The picture signals are both output to the multi-view display apparatus (step S9).

In this situation, "a picture signal that is substantially the same as another picture signal" denotes not only an example where a picture signal that drives the other of the pixel groups is exactly the same as another picture signal that drives the one of the pixel groups but also an example where a picture signal that drives the other of the pixel groups is a signal generated from a source signal of another picture signal that drives the one of the pixel groups. In the multi-view display apparatus, when two pictures are displayed on one screen, under conventional circumstances, the configuration requires that data corresponding to twice as many display pixels as normal be displayed. To display all the data, it is necessary to increase the number of pixels accordingly. To increase the number of pixels, the pixels need to be formed with a high level of definition, and the display apparatuses become very expensive. To cope with this situation, the data is thinned out to lower the resolution level by half. It is also acceptable to input the same signals to both of the pixel groups; however, by inputting a picture signal that has been thinned out instead, it becomes possible to obtain a full-specification display. In other words, although mutually different picture signals are used, the picture displays are substantially the same as each other.

The viewer detecting unit 345 that detects whether there is any viewer sitting in the passenger seat or the driver seat does not have to be realized by the image analysis performed by the imaging device 330a and the image analyzing unit 342. It is acceptable to use other publicly-known techniques such as a pressure sensor provided in each of the seats or an infrared ray sensor that detects human bodies. Also, the method for detecting the surrounding environment does not have to be realized by the image analysis performed by the imaging device 330a and the image analyzing unit 342. It is acceptable to use other publicly-known techniques such as an illuminance meter or a spectz-ophotometer.

When the mode in which it is automatically judged whether the driver is currently driving the vehicle is selected on the operating unit 348, the same procedure as the one in the flowchart explained above is used. However, in this situation, the display control functions so that the display quality of the picture displayed for the passenger seat side is improved. Also, the judgment of whether the driver is currently driving the vehicle may be made by detecting a speed directly from the speedometer (not shown) or by using other publicly-known techniques.

According to the first embodiment described above, the second driving mode control unit performs the color correction and the luminance adjustment to obtain the most appropriate maximum luminance judged from the surrounding environment, on the picture signal used for the display for the driver seat side. The second driving mode control unit also selects, as the picture signal used for the display for the passenger seat side, a picture signal that is substantially the same as the picture signal used for the display for the driver seat side, so that the picture displayed for the driver seat side does not get doubled with another picture. However, the display control performed by the second driving mode control unit is not limited to this example. It is acceptable to apply any of the various modification examples described below, as necessary.

More specifically, the second driving mode control unit may have any other arrangements as long as one of the first pixel group and the second pixel group is driven to improve the quality level of the picture displayed by one of the pixel groups. For example, the second driving mode control unit may drive the other of the pixel groups in a single color, or may turn off the other of the pixel groups. In such a situation, to solve the problem of doubled pictures, because the other of the pixel groups is driven in a single color or is turned off, the other of the pixel groups that leaks from the surrounding of the one of the pixel groups becomes static. Thus, it is possible to prevent the one of the pixel groups from flickering, which means that the luminance and the colors fluctuate. Consequently, the quality level of the picture displayed by the one of the pixel groups is improved. When the other of the pixel groups is turned off to make the display in black, the contrast between this black display and the picture displayed by the one of the pixel groups becomes prominent. Thus, the quality level of the picture is further improved.

Alternatively, another arrangement is acceptable in which a predetermined area of the other of the pixel groups is driven to have a single luminance level, to be in a single color, or to be turned off, based on an average luminance or an average color tone of the picture signal for a predetermined area of the one of the pixel groups. In this situation, the average luminance or the average color tone of the picture signal for the predetermined area, which is the entire area or a partial area, of the one of the pixel groups is calculated, so that the predetermined area, which is the entire area or a partial area, of the other of the pixel groups is driven to have a single luminance level or to be in a single color, based on the calculated average. Consequently, it is possible to improve the quality level of the picture in an appropriate manner for each of the areas. For example, based on the average color tone of the predetermined area of the one of the pixel groups, the color tone of the predetermined area of the other of the pixel groups may displayed with the same color tone, or with a complementary color. As another example, based on the average luminance of the predetermined area of the one of the pixels groups, the luminance of the predetermined area of the other of the pixel groups may be reduced. Consequently, it is possible to eliminate flickering on the screen and to improve the quality level of the picture by, for example, making the contrast more prominent.

As yet another example, another arrangement is acceptable in which, based on the average luminance of the picture signal for a predetermined area of one of the pixel groups, the average luminance of the picture signal for a predetermined area of the other of the pixel groups is adjusted. In this situation, an average of a luminance Y or an average of a color tone (U, V) of a picture signal (e.g. a YUV signal) is calculated for the predetermined area, which is the entire area or a partial area, of the one of the pixel groups, so that the luminance of the picture signal for the corresponding predetermined area, which is the entire area or a partial area, of the other of the pixel groups is adjusted based on the calculated average. Thus, it is possible to improve the visibility of the picture displayed by the one of the pixel groups. For example, by adjusting the picture signal for the other of the pixel groups to have a lower average luminance than the calculated average luminance, it is possible to make the contrast more prominent and to improve the visibility.

As yet another example, another arrangement is acceptable in which, based on an average color tone of the picture signal for a predetermined area of the one of the pixel groups, the color tone of the picture signal for a predetermined area of the other of the pixel groups is adjusted. The so-called "doubled pictures" explained above are caused when two mutually different pictures are viewed while overlapping each other. Thus, when the two mutually different pictures are similar to each other, the extent to which the doubled pictures are caused is reduced. Accordingly, by employing the arrangement described above, it is possible to make an adjustment so that the picture displayed by the other of the pixel groups becomes similar to the color of the picture display by the one of the pixel groups. As a result, the extent to which the doubled pictures are caused is reduced.

Further, it is also possible to reduce the problem of doubled pictures by combining any of these modification examples described above, as necessary. In addition, in any of the examples described above, by obtaining a transform function in advance that is similar to the one shown in Fig. 15 or Fig. 16 and storing the obtained transform function into the transform-function recording unit 349, it is possible to perform the transform process on the picture data easily.

When the transform process is performed on the picture signals, the entire screen is used as one area to adjust the average luminance and the average color described above, and the similarity level is judged for each of the pixels to judge the similarity level of the pictures. However, the method of performing the transform process is not limited to these examples. It is acceptable to divide a screen into a number of areas and perform the transform process in each of the areas.

In other words, when the average luminance within the screen or the average color within the screen is adjusted by using the entire screen as one area, each of all the pixels is multiplied by the same transform function. Thus, the proportion of the pixels that are appropriately adjusted becomes relatively low. However, when the screen is divided into a number of areas, it is possible to display the picture with even higher quality.

When the transform process is performed by judging the similarity level for each of the pixels, the transform process is performed by using a transform function that is different for each the pixels. Thus, it is necessary to have a high processing capability. However, by dividing the screen into a number of areas to reduce the processing amount required in the transform process, it is also possible to solve the problem related to the processing capabilities.

According to the first embodiment describe above, the control unit that displays, in a single color, the picture for a specific one of the viewing directions that is determined by a predetermined condition is configured to automatically perform the high-quality display control on one of the pictures, if there is no viewer sitting in one of the driver seat and the passenger seat. However, by having an arrangement in which the predetermined condition is defined as a priority order that has been set among the mutually independent pictures displayed for the mutually different viewing directions, so that the control unit displays, in a single color, one of the pictures displayed for one of the viewing directions corresponding to the picture having a low priority order, it is possible to exercise control so that the quality level of the picture displayed for the viewing direction corresponding to the picture having a high priority order becomes high. For example, when there are a TV picture received by the radiowave receiving unit and a guidance picture from the navigation apparatus, if the priority order has been set so that the guidance picture has a higher priority order, a single color will be displayed instead of the TV picture having the lower priority, so that the guidance picture can be displayed in high quality.

Further, another arrangement is acceptable in which the predetermined condition is defined as a priority order that has been set among combinations each made up of one of viewing directions and one of the mutually independent pictures corresponding to the viewing direction, so that the control unit displays, in a single color, one of the pictures displayed for the viewing direction corresponding to the picture having a low priority order. For example, when a guidance picture from the navigation apparatus is displayed for the driver seat side, while a TV picture received by the radiowave receiving unit is displayed for the passenger seat side, if the priority order has been set so that a combination used for displaying the TV picture for the passenger seat side has a higher priority order than a combination used for displaying the guidance picture for the driver seat side, a single color will be displayed for the driver seat side instead of the guidance picture, so that the TV picture for the passenger seat side can be displayed in high quality.

Furthermore, yet another arrangement is acceptable in which the predetermined condition is defined as a priority order that has been set among combinations each made up of one of the viewing directions, one of the mutually independent pictures corresponding to the viewing direction, and a state of the vehicle, so that the control unit displays, in a single color, one of the pictures displayed for the viewing direction corresponding to the picture having a low priority order. For example, when a guidance picture from the navigation apparatus is displayed for the driver seat side, and the guidance picture from the navigation apparatus is also displayed for the passenger seat side, if the priority order has been set so that a combination used for displaying the guidance picture for the passenger seat side while the vehicle is running has a higher priority order than a combination used for displaying the guidance picture for the driver seat side while the vehicle is running, a single color will be displayed for the driver seat side instead of the guidance picture, so that the guidance picture for the passenger seat side can be displayed in high quality.

According to the arrangement described above, when the vehicle is in a specific state such as a running state or a stopping state, it is possible to improve the quality level of the picture displayed for a specific viewing direction, which is to be viewed from the specific direction in the vehicle. In the example described above, it is possible to achieve an incidental advantageous effect where it is possible to avoid the risk of having the driver operate the navigation apparatus while he/she is driving the vehicle, because the person sitting in the passenger seat is able to safely operate the navigation apparatus.

In addition, for example, when a guidance picture from the navigation apparatus is displayed for the driver seat side, and the guidance picture from the navigation apparatus is also displayed for the passenger seat side, if the priority order has been so that a combination used for displaying the guidance picture for the passenger seat side while the vehicle is running has a lower priority order than a combination used for displaying the guidance picture for the driver seat side while the vehicle is running, a single color will be displayed for the passenger seat side instead of the guidance picture, so that the guidance picture for the driver seat side can be displayed in high quality.

In this situation, it is possible to display, in high quality, the guidance information from the navigation apparatus, which the driver needs while he/she is driving the vehicle.

### SECOND EMBODIMENT

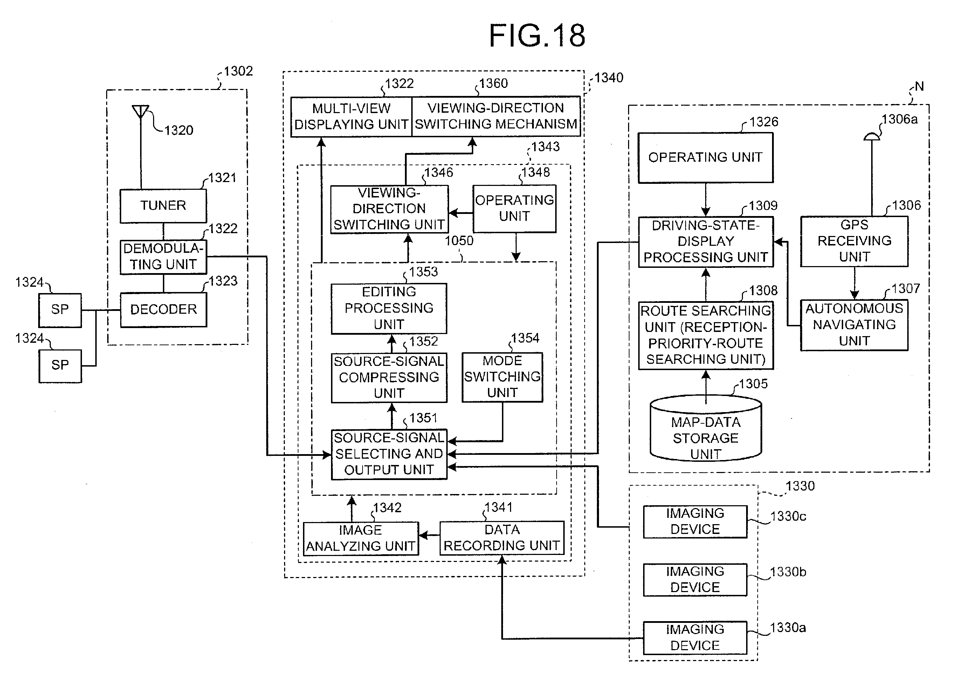

In the description of a second embodiment of the present invention, a picture-signal generating unit will be explained in detail. The picture-signal generating unit generates the picture signal from the source signal, to improve the quality level of a picture viewed from a direction positioned between any two of the viewing directions that are positioned adjacent to each other. As shown in Fig. 18, the vehicle is equipped with the navigation apparatus N that guides a vehicle to a destination, a radiowave receiving unit 1302 that receives digital terrestrial broadcasting, a multi-view display apparatus 1340 that is operable to display, at the same time, a display image from the navigation apparatus N and a display image from the radiowave receiving unit 1302, imaging devices 1330 used for the security purposes, and the like.

The navigation apparatus N includes a map-data storage unit 1305 that stores therein road map data, a GPS receiving unit 1306 that recognizes positional information of the vehicle in which the navigation apparatus N is installed, a GPS antenna 1306a, an autonomous navigating unit 1307 that manages a driving state of the vehicle, a route searching unit 1308 that searches a route to a specified destination, based on the map data, a driving-state-display processing unit 1309 that displays a driving position of the vehicle on a map, and an operating unit 1326 that sets various kinds of operation modes and operating conditions. The navigation apparatus N has a navigation function to guide the vehicle to the specified point of location, the navigation function including one or more CPUs, a ROM that stores therein operation programs for the CPUs, and a RAM that is used as a working area and being configured so that the functional blocks therein are controlled.

The radiowave receiving unit 1302 is configured with a digital television receiver that includes a receiving antenna 1320, a tuner 1321 that selects one of transmission channels (i.e., frequency bands) received via the receiving antenna 1320, an OFDM demodulating unit 1322 that takes out a digital signal from a received signal in the selected channel, performs an error correcting process, and outputs a Transport Stream (TS) packet, and a decoder 1323 that decodes an audio signal out of a picture/audio packet within the TS packet and outputs the decoded audio signal to a speaker 1324 and also decodes a picture signal out of the picture/audio packet within the TS packet and outputs the decoded picture signal to a display unit 1325.

A plurality of imaging devices 1330 are provided in the vehicle. Imaging devices 1330b and 1330c that are disposed on the outside of the vehicle can be used for a vehicle-rear monitor or for measuring an inter-vehicle distance. An imaging device 1330a that is disposed on the inside of the vehicle is used for a security purpose such as crime prevention. The imaging device 1330a is located at a position from where it is possible to monitor the driver seat, the passenger seat, as well as the backseat, to function also as a viewer detecting sensor.

The multi-view display apparatus 1340 includes the multi-view display unit 1325 that is operable to display mutually different pictures for the driver seat side and the passenger seat side, a display control unit 1343 that controls the display of the multi-view display unit 1325, and a viewing-direction switching mechanism 1360 that is integrally formed with the multi-view display unit 1325 and is operable to switch the viewing direction of the multi-view display unit 1325.

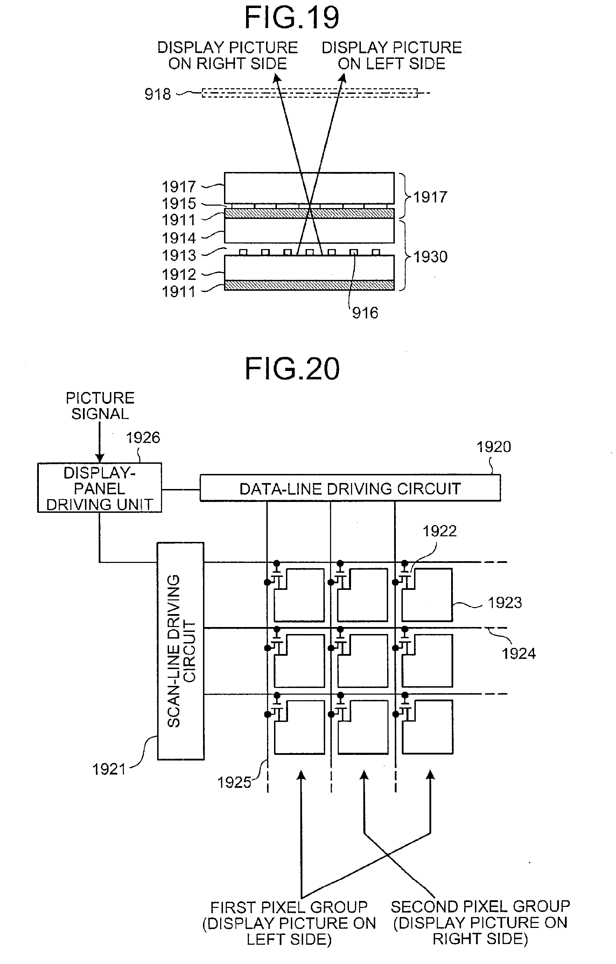

As shown in Fig. 19, the multi-view display unit 1325 is configured by integrally forming a liquid crystal display panel 1930 and a parallax barrier substrate 1917. The liquid crystal display panel 1930 includes a pair of substrates between which a liquid crystal layer 1913 is interposed, the pair of substrates namely being a TFT substrate 1912 on which a TFT array 1916 is formed and an opposing substrate 1914 that is disposed to oppose the TFT substrate 1912, and a pair of polarizers 1911 that have the pair of substrates interposed therebetween. The parallax barrier substrate 1917 includes a micro-lens and a parallax barrier layer 1915 that has light-blocking slits.

In the TFT array 1916, as shown in Fig. 20, a plurality of pixels are formed. Each of the pixels corresponds to a different one of areas defined by data lines 1925 and scan lines 1924. One pixel electrode 1923 that applies a voltage to the liquid crystal layer 1913 and one TFT element 1922 that controls the switching of the pixel electrode 1923 are provided in each of the pixels. A scan-line driving circuit 1921 selectively scans the TFT elements 1922. A data-line driving circuit 1920 controls voltages applied to the pixel electrodes 1923. A display-panel driving unit 1926 controls driving timing of the scan-line driving circuit 1921 and the data-line driving circuit 1920.

The pixels are divided into two pixel groups, namely, a first pixel group and a second pixel group that are arranged (grouped into odd-numbered columns and even-numbered columns) to alternate (i.e., to correspond to every other data line). The first pixel group and the second pixel group are driven independently of each other, based on picture signals that have mutually different sources. Light beams that have passed through the first pixel group and the second pixel group are guided into mutually different directions by the parallax barrier layer 1915, respectively, or some of the light beams in specific directions are blocked. Thus, it is possible to display mutually different pictures for the mutually different directions only at positions near a display plane 1918 in the open space. The two pixel groups do not have to be arranged to alternate. It is acceptable to arrange the two pixel groups in any other way as long as they are arranged in a distributed manner within the screen.

The multi-view display unit 1325 is provided on a front panel in the middle of the driver seat and the passenger seat. The multi-view display unit 1325 is configured to be able to display pictures in such a manner that the picture viewed from the driver seat side and the picture viewed from the passenger seat side are different from each other. For example, picture information from the radiowave receiving unit 1302 is viewed from the passenger seat side, whereas it is possible to use the display apparatus as a display device for the navigation apparatus N so that map information can be viewed from the driver seat side.

In addition, when the multi-view display unit 1325 is viewed from a directly opposite position, the picture displayed for the driver seat side and the picture displayed for the passenger seat side are not completely separated from each other. In other words, the multi-view display unit 1325 is configured to provide multiple picture display, which means that the pictures are viewed while overlapping each other.

The display control unit 1343 includes, as shown in Fig. 18, a data recording unit 1341 that records therein image capture data including data from an area near the passenger seat or the driver seat obtained by the imaging device 1330a, an image analyzing unit 1342 that analyzes whether there is any viewer, a picture-signal generating unit 1350 that performs a transform to generate, from a plurality of source signals, a picture signal used for driving the pixel groups in the multi-view display unit 1325, a viewing-direction switching unit 1346 that controls the viewing-direction switching mechanism 1360, and an operating unit 1348 that selectively performs, from the outside, operations to switch between the source signals and between various types of display modes that are explained later.

The image analyzing unit 1342 is configured to serve as a viewer detecting unit that analyzes and judges whether there is any viewer of the multi-view display apparatus 1340, based on image capture data that is obtained from an area near the passenger seat or the driver seat and has been recorded in the data recording unit 1341.

The operating unit 1348 is an operating panel that is used by the driver or a passenger for selecting a content to be displayed as each of the two pictures displayed on the multi-view display unit 1325, from among a guidance display from the navigation apparatus N, a TV picture display received by the radiowave receiving unit 1302, or an image display from the imaging device that monitors the rear of the vehicle. The picture-signal generating unit 1350 selects picture signals based on the selections made on the operating unit 1348 and outputs the selected picture signals to the multi-view display unit 1325.

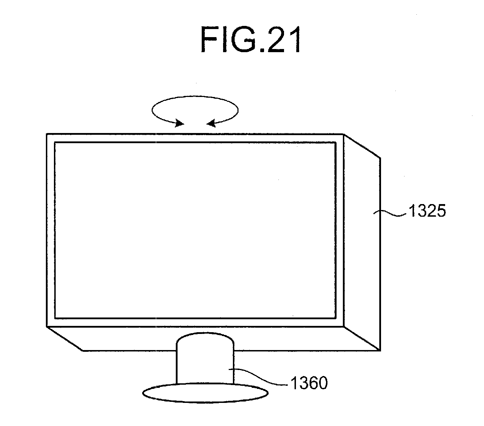

The viewing-direction switching unit 1346 is configured to control the viewing-direction switching mechanism 1360 that changes the display surface direction of the multi-view display unit 1325. For example, as shown in Fig. 21, the viewing-direction switching mechanism 1360 is configured with a rotating mechanism that is attached to a portion of the multi-view display unit 1325 and is operable to change the orientation of the multi-view display unit 1325 by rotating it, to make it possible to view the picture on the multi-view display unit 1325 in the most appropriate state. As the rotating mechanism, a publicly-known technique such as a rotation control motor may be used.

The picture-signal generating unit 1350 includes a source-signal selecting and output unit 1351 that selects, out of a plurality of source signals, source signals to be displayed for the viewing directions that have been selected from the outside by using the operating unit 1348 and outputs the selected source signals, a source-signal compressing unit 1352 that performs a pixel-skipping process on the selected source signals in correspondence with the viewing directions, an editing processing unit 1353 that generates picture signals by combining and editing, in correspondence with the viewing directions, the source signals on which the compressing process has been performed, and a mode switching unit 1354 that switches between various display modes explained later.

The source-signal selecting and output unit 1351 outputs, to the source-signal compressing unit 1352, source signals that are in correspondence with the mode selected by the operating unit 1348 or the mode switching unit 1354.

The source-signal compressing unit 1352 performs a compressing process on the source signals to obtain picture data that matches the number of pixels provided in the multi-view display unit 1325, by performing a pixel-skipping process on the source signals that have been output by the source-signal selecting and output unit 1351, with a phase that corresponds to the viewing directions, i.e., the pixel groups.

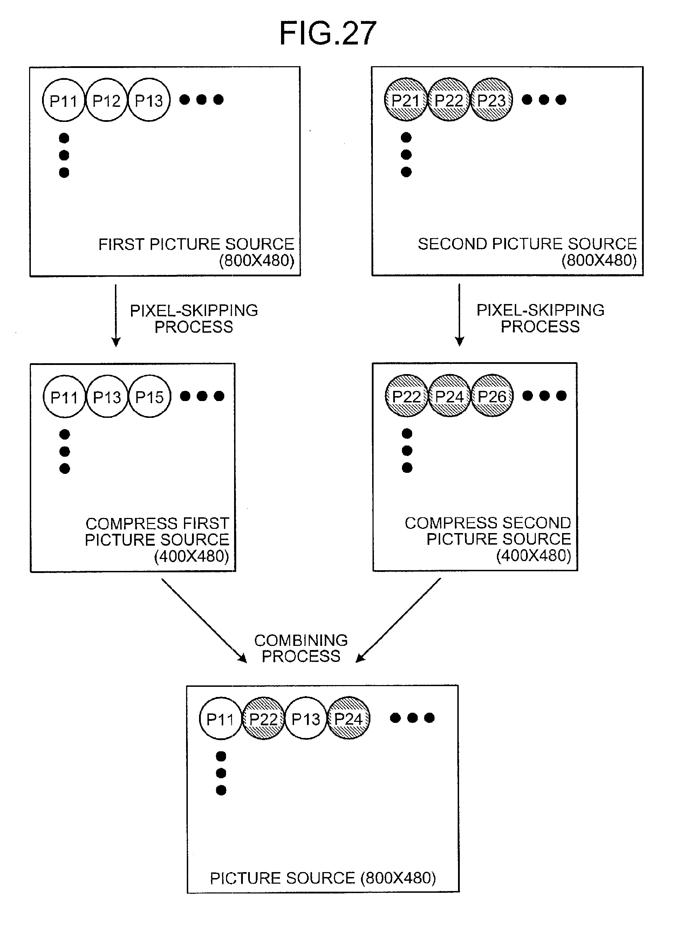

For example, to have mutually different pictures displayed on the multi-view display unit 1325 for the two directions, namely, for the driver seat side direction and for the passenger seat side direction, the 800x480 pixels that constitute a first picture source and a picture source being the source signals respectively corresponding to these two pictures are compressed to 400×480 pixels, to edit and combine the source signals into alternate columns and to obtain picture signals that correspond to the number of pixels of the multi-view display unit 1325, namely, 800×480 pixels. In this situation, as shown in Fig. 27, the source signal for the driver seat side is obtained by pixel-skipping the source signals in odd-numbered columns from the source signal that is supposed to be used for displaying the picture. The source signal for the passenger seat side is obtained by pixel-skipping the source signals in even-numbered columns from the source signal that is supposed to be used for displaying the picture. However, the method of pixel-skipping the source signals is not limited to this example. It is acceptable to use any other method as long as the source signals are thinned out with a phase that is different for each of the mutually different pictures. It is acceptable to perform the pixel-skipping process on the odd-numbered columns and the even-numbered columns, in units of R, G, and B elements that make up each of the pixels.

The editing processing unit 1353 edits and outputs, in correspondence with the pixel groups, source signals on which the compressing process has been performed. Thus, it is possible to display the mutually different pictures for the mutually different directions on the multi-view display unit 1325.

The mode switching unit 1354 controls the display surface direction of the multi-view display unit 1325 directly via the viewing-direction switching unit 1346 according to an operation performed by the operating unit 1348. Also, the mode switching unit 1354 is operable to exercise control to switch the output signal from the source-signal selecting and output unit 1351 that has been selected via the operating unit 1348, between an ordinary multi-view mode (i.e., a first display mode) in which the pictures are displayed so that mutually different pictures are viewed respectively from the driver seat side and the passenger seat side and a single-view mode (i.e., a second display mode and a third display mode) in which the pictures are displayed so that it is possible to view a high-resolution picture from one of the driver seat side and the passenger seat side.

In the second display mode, to enable the driver to view a high-resolution picture, it is automatically judged whether there is anyone sitting in the passenger seat. When no one is sitting in the passenger seat, the picture-signal generating unit 1350 displays, for the passenger seat side, a picture that is substantially the same as the picture displayed for the driver seat side, and also the viewing-direction switching unit 1346 is controlled so that the display surface direction of the multi-view display unit 1325 is oriented toward the driver seat side. In other words, the second display mode is a mode in which greater importance is given to the driver seat side.

In the third display mode, to enable a passenger to view a high-resolution picture, it is automatically judged whether the driver is currently driving the vehicle (i.e., whether the vehicle is running). When the driver is currently driving the vehicle, the picture-signal generating unit 1350 displays, for the driver seat side, a picture that is substantially the same as the picture displayed for the passenger seat side, and also the viewing-direction switching unit 1346 is controlled so that the display surface direction of the multi-view display unit 1325 is oriented toward the passenger seat side. In other words, the third display mode is a mode in which greater importance is given to the passenger seat side. In the first display mode, the viewing-direction switching unit 1346 exercises control so that the display surface direction of the multi-view display unit 1325 is oriented toward a direction in the center of an angle formed by the driver seat and the passenger seat, so that it is possible to view the mutually different pictures respectively from these seats.

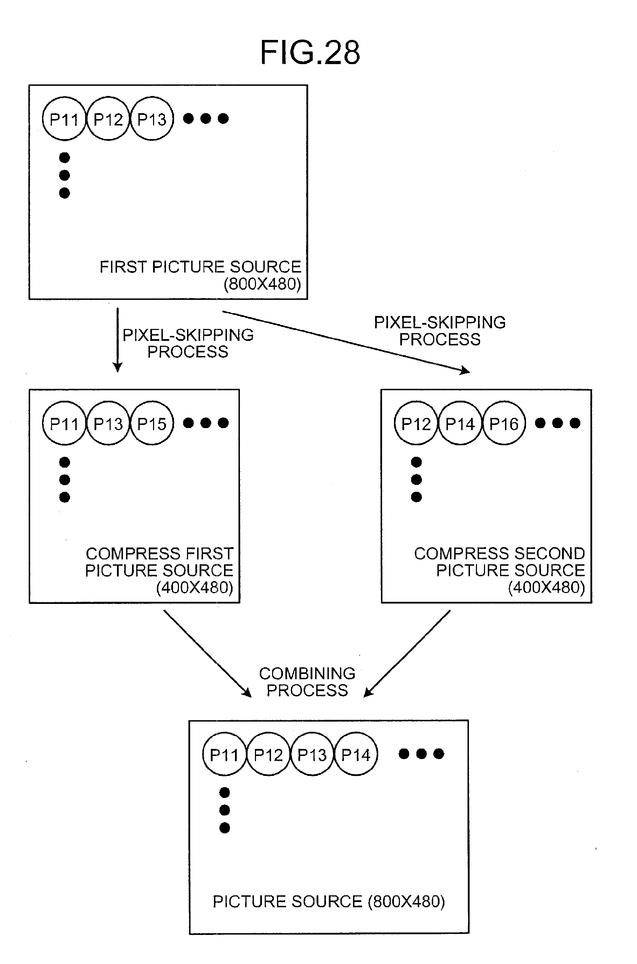

In this situation, "a picture that is substantially the same as another picture" denotes, as shown in Fig. 28, a picture displayed by a compressed source signal obtained through a pixel-skipping process performed by the source-signal selecting and output unit 1351, by using the same source signal as the source signal of a picture displayed for the driver seat side and as the source signal of a picture displayed for the passenger seat side, with a phase that corresponds to the viewing directions. In other words, according to the second embodiment, the same source signal is used, and the source signals are thinned out with a phase of the odd-numbered columns and the even-numbered columns that corresponds to the viewing directions and then combined, instead of using the same phase in the compression process of the first and the second picture sources. As a result, it is possible to generate a combined picture signal that is substantially the same as the source signal.

The two compressed source signals from which the pictures that are substantially the same as each other are output are edited and output by the editing processing unit 1353. As a result, it is possible to obtain a picture that is displayed on the multi-view display unit 1325 to be viewed from a directly opposite position and that has the same resolution level as an original picture displayed by the source signal. The "picture to be viewed from a directly opposite position" denotes a picture to be viewed from a direction positioned between a viewing direction on the driver seat side and a viewing direction on the passenger seat side.

To display the pictures that are substantially the same as each other in the second display mode and in the third display mode, another arrangement is acceptable in which the source-signal selecting and output unit 1351 directly outputs the source signals to the multi-view display unit 325, without performing the compressing process on the source signals. In other words, also with this arrangement, it is possible to obtain a picture that is displayed on the multi-view display unit 1325 to be viewed from a directly opposite position and that has the same resolution level as the source signal of this picture.

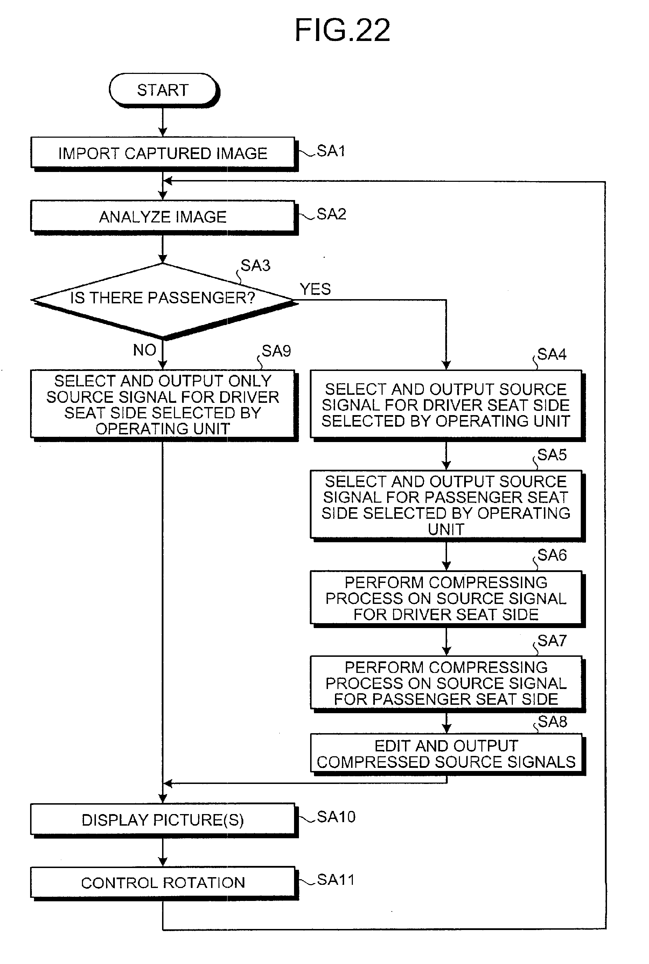

Next, the operation performed in the second display mode will be explained, with reference to a flowchart shown in Fig. 22. The procedure in the flowchart starts when the multi-view display apparatus 1340 is activated and is repeatedly performed until the electric power is turned off.

An image captured by the imaging devices 1330 is imported (step SA1), so that the image analyzing unit 1342 performs an image analysis based on image data that has been obtained from an area in the vehicle near the passenger seat and is stored in the data recording unit 1341 (step SA2). When the image analyzing unit 1342 has judged that there is a person sitting in the passenger seat (step SA3), the source-signal selecting and output unit 1351 selects and outputs a source signal of a content that is to be displayed for the driver seat side and has been selected by the operating unit 1348, and also selects and outputs a source signal of a content that is to be displayed for the passenger seat side and has been selected by the operating unit 1348 (steps SA4 and SA5). On these two source signals, a compressing process is performed by the source-signal compressing unit 1352 (steps SA6 and SA7), and an editing process is performed by the editing processing unit 1353 (step SA8), before the source signals are output to the multi-view display unit 1325. Thus, a multi-view mode is realized in which mutually different pictures are displayed for the driver seat side and the passenger seat side (step SA10). Also, the viewing-direction switching unit 1346 exercises control to rotate the viewing-direction switching mechanism 1360 (i.e., a rotating mechanism) so that the multi-view display unit 1325 is oriented in such an angle that the picture displayed for the driver seat side and the picture displayed for the passenger seat side can be easily viewed from the driver seat and the passenger seat, respectively (step SA11).

On the other hand, when it has been judged that no one is sitting in the passenger seat (step SA3), only the source signal of the content to be displayed for the driver seat side that has been selected by the operating unit 1348 is selected (step SA9), and is directly output to the multi-view display unit 1325 without being compressed. Thus, a single-view mode is realized in which the pictures that are substantially the same as each other are displayed for the driver seat side and the passenger seat side (step SA10). Also, the viewing-direction switching unit 1346 exercises control to rotate the viewing-direction switching mechanism 1360 (i.e., the rotating mechanism) so that the front surface of the multi-view display unit 1325 is oriented toward the driver seat side (step SA11). In other words, the viewing-direction switching unit 1346 exercises the rotation control so that the driver is able to view the picture having a high-resolution level.

In the example above, it is checked whether there is anyone sitting in the passenger seat along with the driver; however, needless to say, if a person is sitting in the passenger seat and no one (i.e., no driver) is sitting in the driver seat, only the source signal for the passenger seat side is selected and output. In other words, the output is controlled in correspondence with the state of the people in the vehicle.

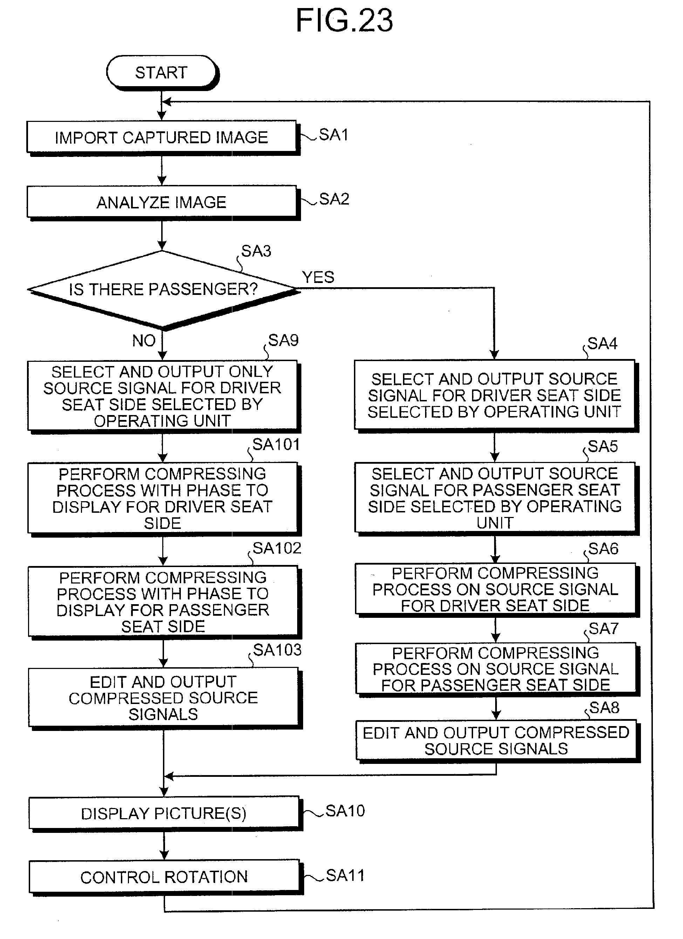

When no one is sitting in the passenger seat, it is acceptable to perform a procedure as shown in a flowchart in Fig. 23. In this procedure, only a source signal of a content to be displayed for the driver seat side that has been selected by the operating unit 1348 is selected and output (step SA9). The source-signal compressing unit 1352 performs a pixel-skipping process on the source signals with mutually different phases respectively for the compressed source signal to be displayed for the driver seat side and for the compressed source signal to be displayed for the passenger seat side (steps SA101 and SA102). After being edited by the editing processing unit 1353 (step SA103), the two compressed source signals are output to the multi-view display unit 1325. Thus, the pictures that are substantially the same as each other are displayed for the driver seat side and the passenger seat side (step SA10). Also, the viewing-direction switching unit 1346 exercises control to rotate the viewing-direction switching mechanism 1360 (i.e., the rotating mechanism) so that the front surface of the multi-view display unit 1325 is oriented toward the driver seat side (step SA11). In other words, the viewing-direction switching unit 1346 exercises the rotation control so that the driver is able to view the picture having a high-resolution level.

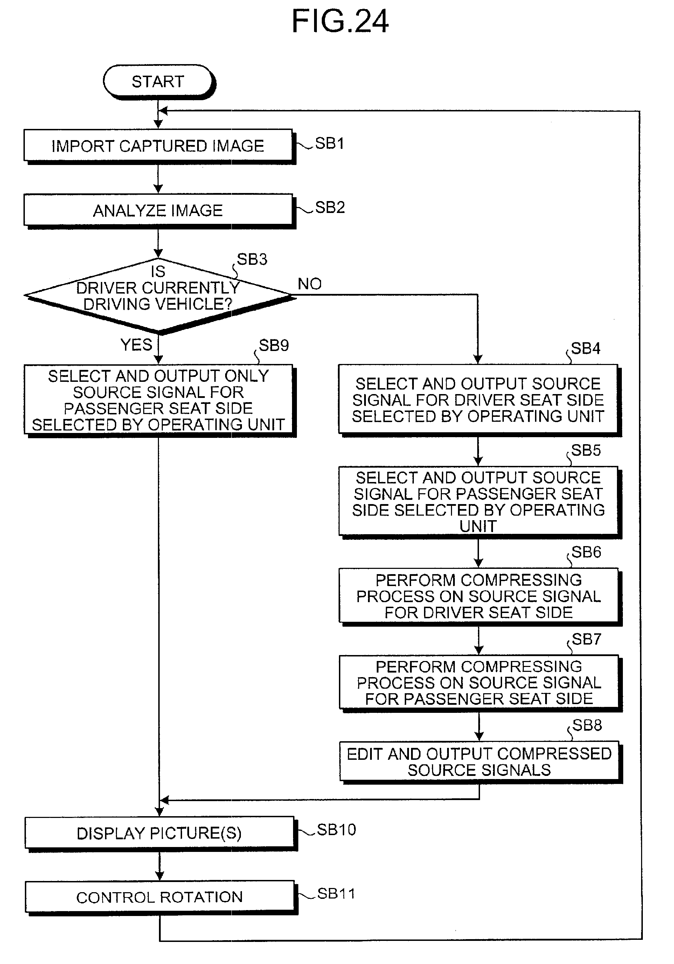

Next, the operation performed in the third display mode will be explained, with reference to a flowchart shown in Fig. 24. The procedure in the flowchart starts when the multi-view display apparatus 1340 is activated and is repeatedly performed until the electric power is turned off.

An image captured by the imaging device 1330a is imported (step SB1), so that the image analyzing unit 1342 performs an image analysis based on image data that has been obtained from an area in the vehicle near the driver seat and is stored in the data recording unit 1341 (step SB2). When the image analyzing unit 1342 has judged that the driver is not currently driving the vehicle (step SB3), the source-signal selecting and output unit 1351 selects and outputs a source signal of a content that is to be displayed for the driver seat side and has been selected by the operating unit 1348, and also selects and outputs a source signal of a content that is to be displayed for the passenger seat side and has been selected by the operating unit 1348 (steps SB4 and SB5). On these two source signals, a compressing process is performed by the source-signal compressing unit 1352 (steps SB6 and SB7), and also, an editing process is performed by the editing processing unit 1353 (step SB8), before the source signals are output to the multi-view display unit 25. Thus, a multi-view mode is realized in which mutually different pictures are displayed for the driver seat side and the passenger seat side (step SB10). Also, the viewing-direction switching unit 1346 exercises control to rotate the viewing-direction switching mechanism 1360 (i.e., the rotating mechanism) so that the multi-view display unit 1325 is oriented in such an angle that the picture for the driver seat side and the picture for the passenger seat side can be easily viewed from the driver seat and the passenger seat respectively (step SB11).

On the other hand, when it has been judged that the driver's is currently driving the vehicle (step SB3), only the source signal of the content to be displayed for the passenger seat side that has been selected by the operating unit 1348 is selected (step SB9) and is directly output to the multi-view display unit 1325. Thus, a single-view mode is realized in which the pictures that are substantially the same as each other are displayed for the driver seat side and the passenger seat side (step SB10). Also, the viewing-direction switching unit 1346 exercises control to rotate the viewing-direction switching mechanism 1360 (i.e., the rotating mechanism) so that the front surface of the multi-view display unit 1325 is oriented toward the passenger seat side (step SB11). In other words, the viewing-direction switching unit 1346 exercises the rotation control so that the passenger is able to view the picture having a high-resolution level.

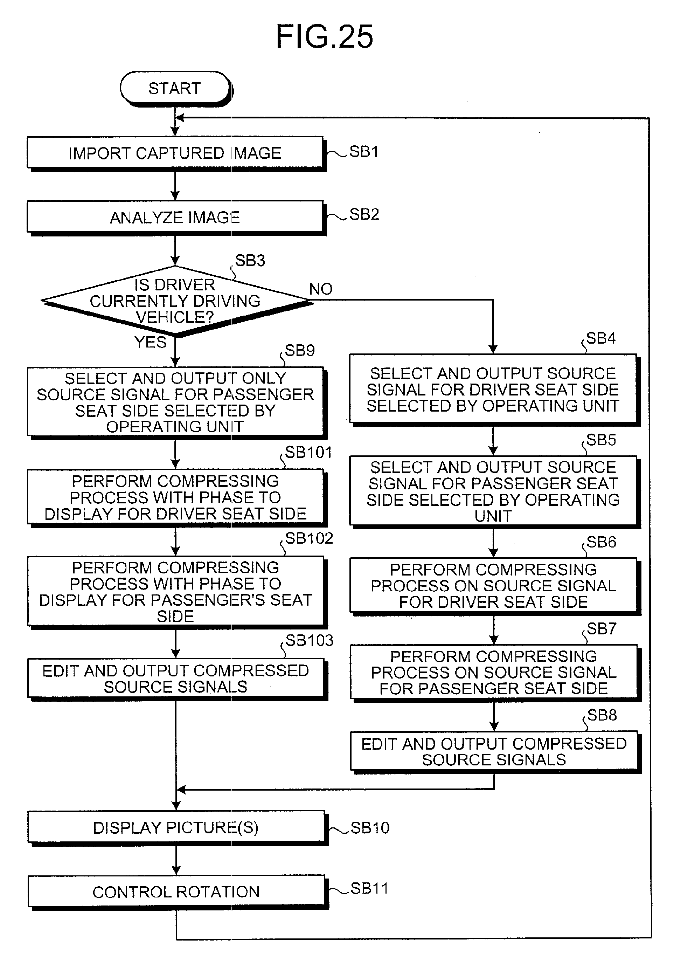

When it has been judged that the driver is currently driving the vehicle, it is acceptable to perform a procedure as shown in a flowchart in Fig. 25. In this procedure, only a source signal of a content to be displayed for the passenger seat side that has been selected by the operating unit 1348 is selected and output (step SB9). The source-signal compressing unit 1352 performs a pixel-skipping process on the source signals with mutually different phases respectively for the compressed source signal to be displayed for the driver seat side and for the compressed source signal to be displayed for the passenger seat side (steps SB101 and SB102). After being edited by the editing processing unit 1353 (step SB103), the two compressed source signals are output to the multi-view display unit 1325. Thus, the pictures that are substantially the same as each other are displayed for the driver seat side and the passenger seat side (step SB10). Also, the viewing-direction switching unit 1346 exercises control to rotate the viewing-direction switching mechanism 1360 (i.e., the rotating mechanism) so that the front surface of the multi-view display unit 1325 is oriented toward the passenger seat side (step SB11). In other words, the viewing-direction switching unit 1346 exercises the rotation control so that the passenger is able to view the picture having a high-resolution level.

The viewer detecting unit that judges whether there is any viewer in the driver seat, the passenger seat, and the backseat does not have to be realized by the image analysis performed by the imaging device 1330a and the image analyzing unit 1342. It is possible to use other publicly-known techniques such as a pressure sensor provided in each of the seats, an infrared ray sensor that detects human bodies, a weight sensor provided in each of the seats, or a switch that detects whether the seatbelts are worn.

Next, another embodiment example of the second embodiment will be explained. In the first example of the second embodiment described above, the viewing-direction switching unit 1346 controls the multi-view display unit 1325 to be in such a direction that is suitable for each of the display state and integrally rotates the multi-view display unit 1325 by controlling the viewing-direction switching mechanism 1360 (i.e., the rotating mechanism) attached to a portion of the multi-view display unit 1325. In a second example of the second embodiment, instead of the rotating mechanism, a sliding mechanism that slides the parallax barrier substrate 1917 and the liquid crystal display panel 1930 along a direction in which the parallax barriers are arranged is controlled, and the second example of the second embodiment will be explained below.

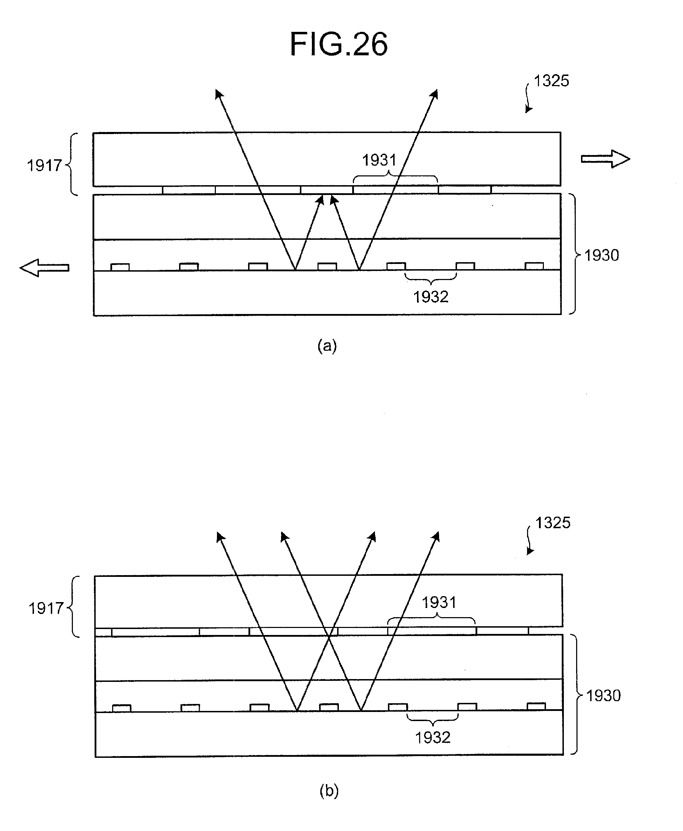

The viewing-direction switching mechanism 1360 includes, instead of the rotating mechanism, a sliding mechanism that relatively slides the parallax barrier substrate 1917 and the liquid crystal display panel 1930 by a predetermined amount. As shown in Fig. 26, the viewing-direction switching unit 1346 controls the sliding mechanism so that the relationship between a center position of an opening 1931 in the light-blocking slit and a center position of an opening 1932 in the pixel changes uniformly within the plane of the multi-view display unit 1325. Thus, the viewing-direction switching unit 1346 exercises control to switch between: an ordinary multi-view display state (Fig. 26(a)) in which the viewing directions are symmetrical with respect to the direction of a normal line of the multi-view display unit 1325 and in which the pictures are displayed as multiple pictures when being viewed from a position directly opposite the display, and a different-angle multi-view display state (Fig. 26 (b)) in which the viewing directions are asymmetrical with respect to the direction of a normal line of the multi-view display unit 1325 and in which the pictures are displayed as multiple pictures when being viewed from any direction other than the position directly opposite the display.

To realize the sliding mechanism, it is possible to use any publicly-known technique such as, for example, attaching micro control motors to the four sides of the multi-view display unit 1325. It is preferable if there is no air layer formed between the parallax barrier substrate 1917 and the liquid crystal display panel 1930. Thus, it is preferable that the parallax barrier substrate 1917 and the liquid crystal display panel 1930 are adhered to each other by using a mucous substance, e.g. a silicone resin, having a refractive index (around 1.5) that is substantially the same as those of these substrates.

According to the second example of the second embodiment, the sliding control is performed, instead of the rotation control performed at steps SA11 and SB11 performed in the first example of the second embodiment. The viewing-direction switching unit 1346 controls the sliding mechanism so that the multi-view display unit 1325 is in the ordinary multi-view display state when the picture for the driver seat side and the picture for the passenger seat side should be viewed from the driver seat side and the passenger seat side, respectively. Alternatively, the viewing-direction switching unit 1346 controls the sliding mechanism so that the multi-view display unit 1325 is in the different-angle multi-view display state when a picture having a high-resolution level should be displayed on one of the driver seat side and the passenger seat side.

According to the second example of the second embodiment described above, it is possible to switch the display state of the multi-view display unit 1325 between the ordinary multi-view display state and the different-angle multi-view display state, by using the sliding mechanism; however, it is acceptable to switch the display state of the multi-view display unit 1325 by configuring the parallax barrier substrate with a liquid crystal display panel.

More specifically, the light-blocking slit may be realized by the display of the liquid crystal display panel that is used instead of the parallax barrier substrate so that it is possible to switch the display state between the ordinary multi-view display state and a standard display state in which the multi-view display state is not achieved, by switching the light-blocking slit between a display state and a non-display state. The light-blocking slit is controlled to be in one of the display state and the non-display state, so that the normal multi-view display state is achieved, when the picture for the driver seat side and the picture for the passenger seat side on the multi-view display unit 25 should be viewed from the driver seat and the passenger seat respectively, whereas the standard display state is achieved, when a picture having a high-resolution level should be displayed for the driver seat side and the passenger seat side.

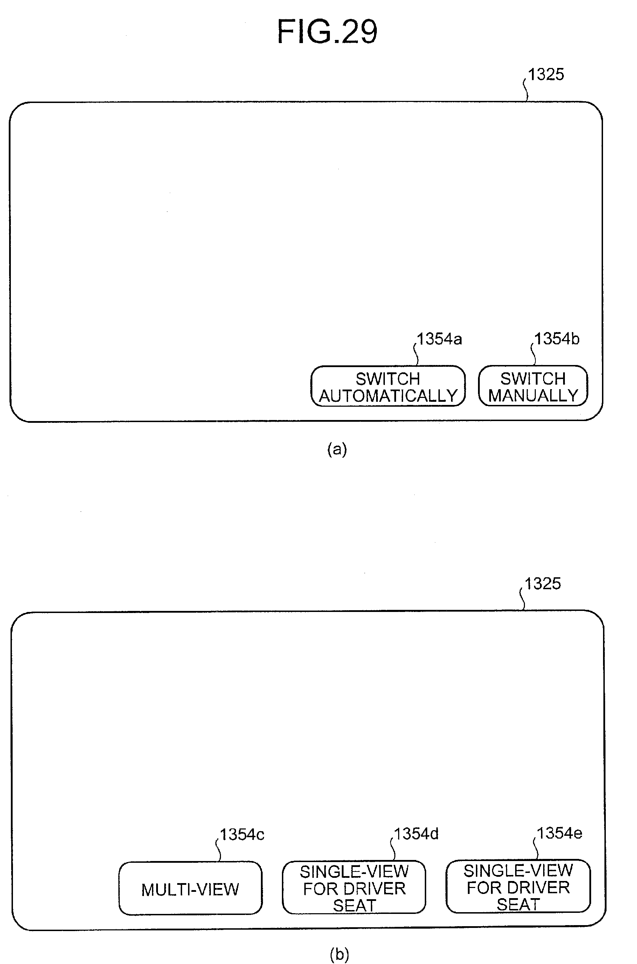

According to the embodiment examples described above, based on the detection result obtained by the viewer detecting unit, the mode switching unit 1354 automatically switches the display mode between the multi-view mode in which mutually different pictures are viewed from the driver seat side and the passenger seat side and the single-view mode in which a picture having a high-resolution level is viewed from one of the driver seat side and the passenger seat side; however, another arrangement is acceptable in which the display mode is manually switched according to a user's intention. For example, as shown in Fig. 29(a), the mode switching unit 1354 may be arranged so that display mode selecting switches 1354a and 1354b that serve as a display mode selecting unit are displayed on the touch-panel display screen of the multi-view display unit 1325, so that it is possible to perform an operation to select one out of an automatic switching mode and a manual switching mode. Further alternatively, the display mode selecting switch may be configured with a hardware switch that is provided near the multi-view display unit 1325.

When the automatic switching mode is selected in Fig. 29(a), the mode switching unit 1354 operates to automatically select one of the first, the second, and the third display modes that are descried above, based on the detection result obtained by the viewer detecting unit. When the manual switching mode is selected in Fig. 29(a), the mode switching unit 1354 operates to further display, as shown in Fig. 29(b), selecting switches 1354c, 1354d and 1354e with which it is possible to select one of the multi-view mode, a single-view mode in which it is possible to view a high-resolution picture from the driver seat side, and another single-view mode in which it is possible to view a high-resolution picture from the passenger seat side. As a result, the display is switched to realize the selected display mode.

Further, in any of the embodiment examples described above, in the single-view mode obtained as a result of the display switching process performed by the mode switching unit 1354, it is possible to view the picture having a high-resolution level because the viewing-direction switching unit 1346 rotates the multi-view display unit 1325 so that the display surface thereof if oriented toward one of the driver seat side and the passenger seat side or because the viewing-direction switching unit 1346 relatively slides the parallax barrier substrate 1917 and the liquid crystal display panel 1930 by the predetermined amount; however, in the single-view mode obtained as a result of the display switching process performed by the mode switching unit 1354, even if the single-view mode is selected, it is acceptable to keep the multi-view mode in which mutually different pictures are viewed from the driver seat side and the passenger seat side without performing the rotation control or the sliding control, so that it is possible to switch the display between a multi-view mode in which the picture sources are mutually different and a single-view mode in which one of the picture sources is selected and the pictures that are substantially the same as each other are displayed for the driver seat side and the passenger seat side.

With this arrangement, when the automatic switching mode is selected, in addition to the judgment made by the viewer detecting unit as to whether there is anyone sitting in the driver seat and whether there is anyone sitting in the passenger seat, it is judged whether there is anyone sitting in the backseat. When it has been judged that there are one or more persons sitting in the backseat, the display mode is automatically switched to the single-view mode. As a result, it is possible to arrange so that the one or more persons sitting in the backseat are able to view a picture having a high-resolution level. For example, it is possible to switch the display mode so that the single-view mode is used when there is a person sitting only in the driver seat, and the multi-view mode is used when there are people sitting only in the driver seat and in the passenger seat, and also, the single-view mode is used when there are one or more persons sitting in the backseat, regardless of whether there is anyone sitting in the passenger seat.

According to the embodiment examples above, the multi-view display apparatus that is operable to display, at the same time, mutually different pictures for the two directions has been explained; however, the present invention applies in the same fashion to a multi-view display apparatus that is operable to display, at the same time, mutually different pictures for more than two directions. Also, in the explanation above, a liquid crystal display panel like the one disclosed in Japanese Patent Application Laid-open No. 2004-206089 is used as the multi-view display apparatus; however, the present invention is not limited to this example. It is possible to apply the present invention to a display like the one disclosed in Japanese Patent Application Laid-open No. 2003-15535 or any other multi-view display apparatuses in general that each include an organic electroluminescence (EL), a plasma display, a Cathode Ray Tube (CRT), or a Surface-conduction Electron-emitter Display (SED).

The term "picture" or "pictures" used in the description of the present invention refers to both still images and moving images.

In the embodiment examples described above, a multi-view display apparatus installed in a vehicle is used as an example; however, the present invention is not limited to this example. It is possible to apply the present invention to a home-use display apparatus.

### THIRD EMBODIMENT

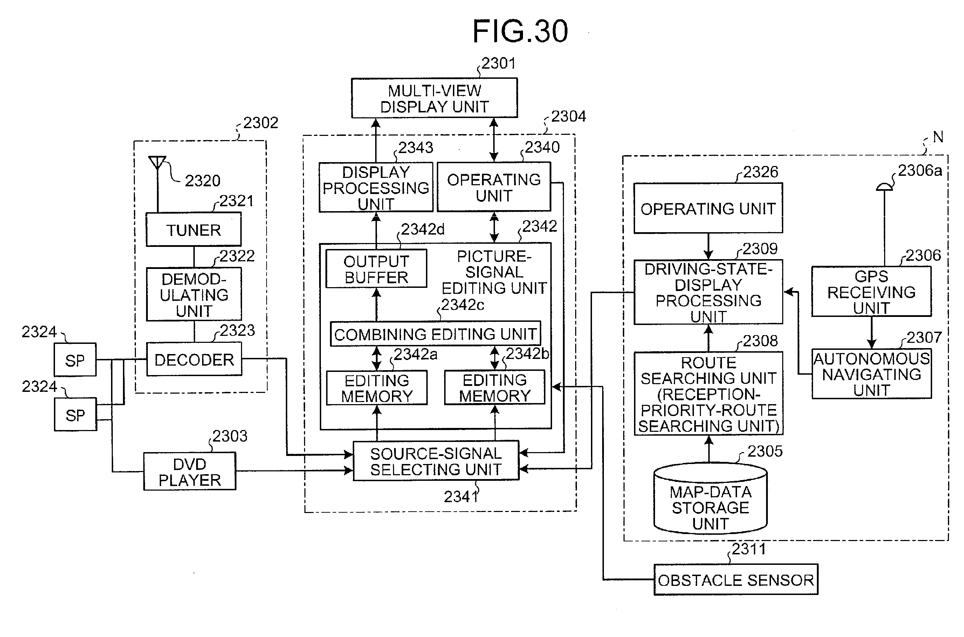

According to a third embodiment of the present invention, as shown in Fig. 30, the vehicle is equipped with the navigation apparatus N that guides a vehicle to a destination, a radiowave receiving unit 2302 that receives digital terrestrial broadcasting, a DVD player 2303, a multi-view display unit 2301 that displays images that are output from these apparatuses, and the like. Also, a display control apparatus 2304 that controls the display of the multi-view display unit 2301 is provided. The multi-view display unit 2301 and the display control apparatus 2304 constitute a display apparatus.

The navigation apparatus N is configured to include a map-data storage unit 2305 that stores therein road map data, a GPS receiving unit 2306 that recognizes positional information of the vehicle in which the navigation apparatus N is installed, a GPS antenna 2306a, an autonomous navigating unit 2307 that manages a driving state of the vehicle, a route searching unit 2308 that searches a route to a specified destination, based on the map data, a driving-state-display processing unit 2309 that displays a driving position of the vehicle on a map, and an operating unit 2310 that sets various kinds of operation modes and operating conditions. The navigation apparatus N has a navigation function to guide the vehicle to the specified point of location, the navigation function including one or more CPUs, a ROM that stores therein operation programs for the CPUs, and a RAM that is used as a working area and being configured so that the functional blocks therein are controlled.

The radiowave receiving unit 2302 is configured with a digital television receiver that includes a receiving antenna 2320, a tuner 2321 that selects one of transmission channels (i.e., frequency bands) received via the receiving antenna 2320, an OFDM demodulating unit 2322 that takes out a digital signal from a received signal in the selected channel, performs an error correcting process, and outputs a Transport Stream (TS) packet, a decoder 2323 that decodes an audio signal out of a picture/audio packet within the TS packet and outputs the decoded audio signal to a speaker SP and also decodes a picture signal out of the picture/audio packet within the TS packet and outputs the decoded picture signal to the display control apparatus 2304.

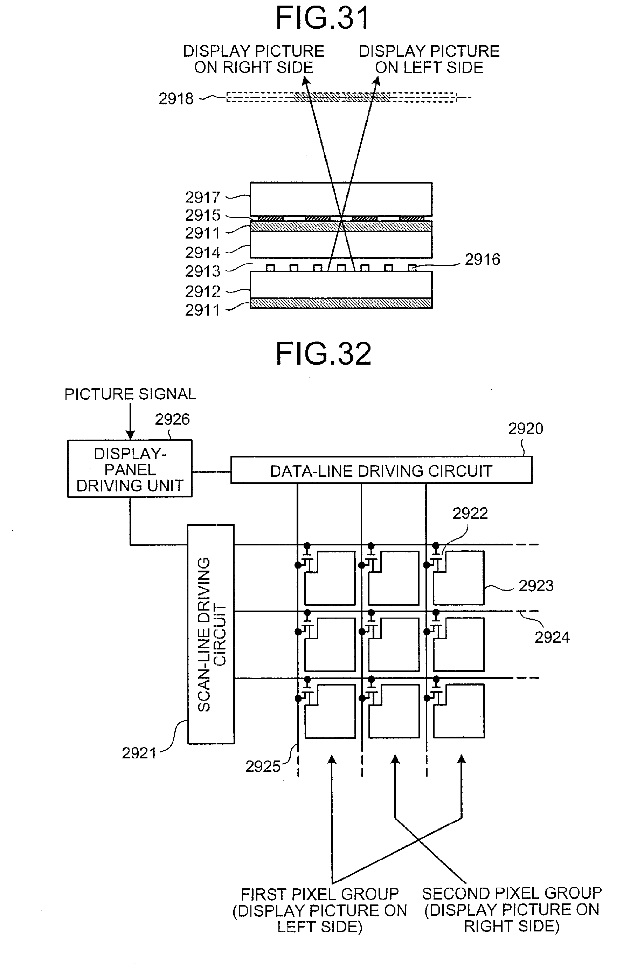

As shown in Fig. 31, the multi-view display unit 2301 is configured by integrally forming a liquid crystal display panel and a parallax barrier substrate 2917. The liquid crystal display panel includes a pair of substrates between which a liquid crystal layer 2913 is interposed, the pair of substrates namely being a TFT substrate 2912 on which a TFT array 2916 is formed and an opposing substrate 2914 that is disposed to oppose the TFT substrate 2912, and a pair of polarizers 2911 that have the pair of substrates interposed therebetween. The parallax barrier substrate 2917 includes a micro-lens and a parallax barrier layer 2915 that has light-blocking slits.

In the TFT array 2916, as shown in Fig. 32, a plurality of pixels are formed. Each of the pixels corresponds to a different one of areas defined by data lines 2925 and scan lines 2924. One pixel electrode 2923 that applies a voltage to the liquid crystal layer 2913 and one TFT element 2922 that controls the switching of the pixel electrode 2923 are provided in each of the pixels. A scan-line driving circuit 2921 selectively scans the TFT elements 2922. A data-line driving circuit 2920 controls voltages applied to the pixel electrodes 2923. A display-panel driving unit 2926 controls driving timing of the scan-line driving circuit 2921 and the data-line driving circuit 2920.

The pixels are divided into two pixel groups, namely, a first pixel group corresponding to a first viewing direction and a second pixel group corresponding to a second viewing direction that are arranged (grouped into odd-numbered columns and even-numbered columns) to alternate (i.e., to correspond to every other data line). The first pixel group and the second pixel group are driven independently of each other, based on picture signals that have mutually different sources. Light beams that have passed through the first pixel group and the second pixel group are guided into mutually different directions by the parallax barrier layer 2915, respectively, or some of the light beams in specific directions are blocked. Thus, it is possible to display mutually different pictures for the mutually different directions only at positions near a display plane 2918 in the open space. The two pixel groups do not have to be arranged to alternate. It is acceptable to arrange the two pixel groups in any other way as long as they are arranged in a distributed manner within the screen.

The multi-view display unit 2301 is provided on a front panel in the middle of the driver seat and the passenger seat. The multi-view display unit 2301 is configured to be able to display pictures in such a manner that the picture viewed from the driver seat side, which is the first viewing direction, and the picture viewed from the passenger seat side, which is the second viewing direction, are different from each other. For example, picture information of a TV program received by the radiowave receiving unit 2302 is viewed from the passenger seat side, whereas a rout guidance picture from the navigation apparatus N is viewed from the driver seat side.

The display control apparatus 2304 includes, as shown in Fig. 30, an operating unit 2340 that operates to set a display mode or the like a source-signal selecting unit 2341 to which source signals from the navigation apparatus N, the radiowave receiving unit 2302, and the DVD player 2303 are input and that serves as a switching circuit that selects one of the source signals based on a display condition obtained as a result of an operation performed by the operating unit 2340, a picture-signal editing unit 2342 that edits the selected source signal to generate a picture signal that corresponds to the multi-view display unit 2301, and a display processing unit 2343 that drives the multi-view display unit 2301 based on the edited picture signal.

The picture-signal editing unit 2342 includes editing memories 2342a and 2342b that buffer, for each of the RGB pixels, frame data of the source signals from two systems that are selected by the source-signal selecting unit 2341, a combining editing unit 2342c that combines and edits the frame data of the two source signals to obtain a single piece of frame data, and an output buffer 2342d that buffers the frame data obtained as a result of the combining editing process. The combining editing unit 2342c performs the editing process while performing a pixel-skipping process on the arrangement of pixel data in the frames of both of the source signals, so that a pixel group that corresponds to the first viewing direction is driven by one of the source signals and a pixel group that corresponds to the second viewing direction is driven by the other of the source signals. As a result of the combining editing process, a viewer of the multi-view display unit 2301 who is viewing from the first viewing direction is able to view the picture that corresponds to the one of the source signals, whereas another viewer who is viewing from the second viewing direction is able to view the picture that corresponds to the other of the source signals.

The source-signal selecting unit 2341 is further configured to be able to select, as a common source signal, the source signal corresponding to the first viewing direction and the source signal corresponding to the second viewing direction that is different from the first viewing direction. The picture-signal editing unit 2342 has a function of editing the picture signals so that the pixels that are driven by their respective picture signals having the source signal in common and respectively correspond to the first viewing direction and the second viewing direction are relatively displaced with respect to a reference position in a predetermined direction. The display processing unit 2343 is configured to function as an emphasized display processing unit that drives the pixels corresponding to the first and the second viewing directions, based on the picture signals obtained after the editing process.

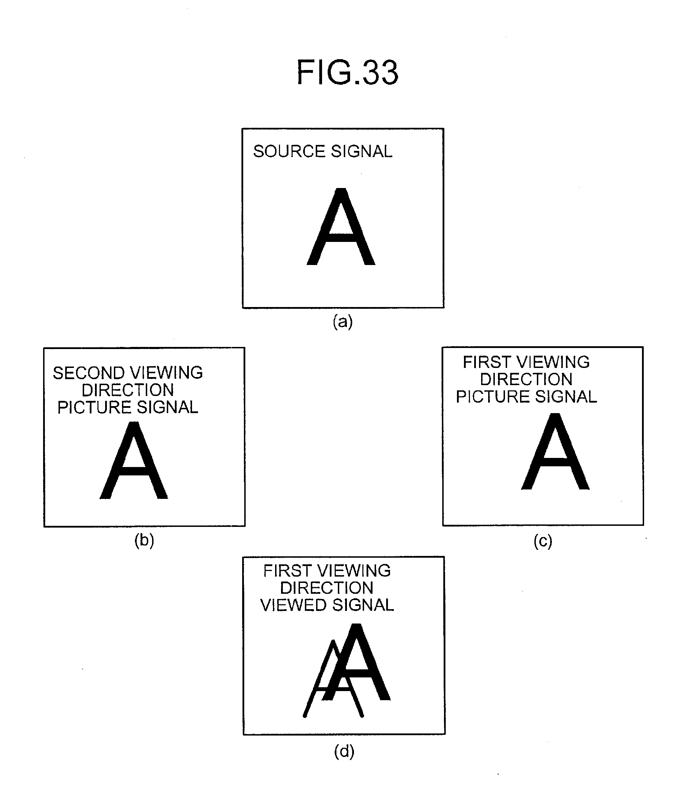

More specifically, the picture-signal editing unit 2342 performs an editing process to move, relative to each other, the two pieces of frame data stored in the editing memories 2342a and 2342b, before performing the combining editing process to obtain the single piece of frame data, so that the picture resulting from the source signal in common as shown in Fig. 33(a) is made into a picture as shown in Fig. 33(b) that is obtained by driving a pixel group corresponding to the first viewing direction and another picture as shown in Fig. 33(c) that is obtained by driving a pixel group corresponding to the second viewing direction. As a result, to the viewer who is viewing the display from the first viewing direction, as shown in Fig. 33(d), the picture that is displayed for the second viewing direction and fails to be blocked by the parallax barrier layer 2915 looks as if it was a shadow of the picture displayed for the first viewing direction. Therefore, the picture is displayed with an emphasis that exhibits a quasi-three-dimensional appearance.

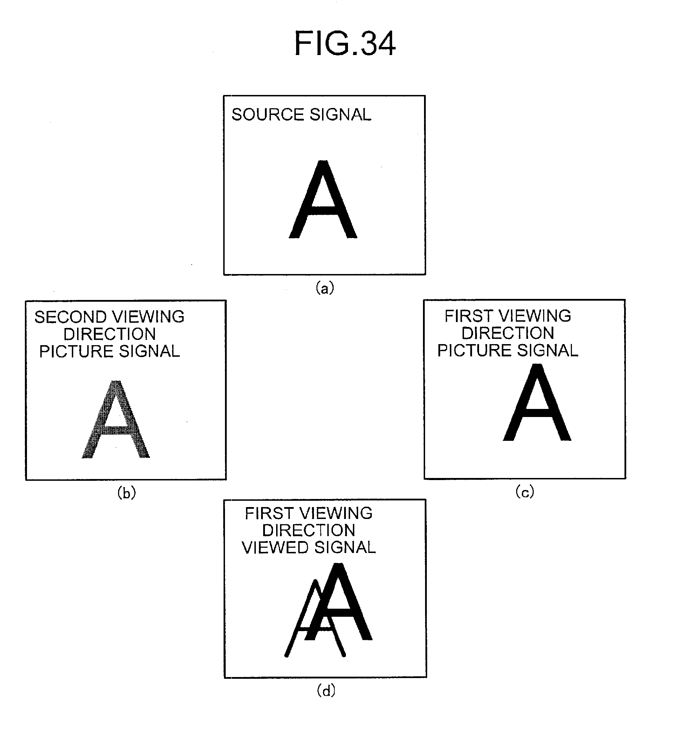

In this situation, the effect described above is achieved by performing the combining editing process after performing the process of displacing one or both of the pixel groups in the predetermined direction with respect to the reference position. The reference position is defined by the pixel arrangements of both of the pixel groups that are used when the picture signals respectively corresponding to the first viewing direction and the second viewing direction are combined and edited based on the mutually different source signals. There is no particular limitation as to the direction and the amount by which the pixel groups are displaced. The direction and the amount may be selected as necessary within a range that is possible to yield the emphasizing effect. According to the third embodiment, it is possible to variably specify the displacement direction and the displacement amount by using the operating unit 2340. Further, as shown in Fig. 34 (a) to Fig. 34 (d), by having an arrangement in which one or both of the luminance and the hue of the picture that is displayed for the second viewing direction and fails to be blocked by the parallax barrier layer 2915 are different from those of the picture that is displayed for the first viewing direction, it is possible to make the effect of the emphasized display more prominent. In this situation, it is also possible to specify the luminance and the hue by using the operating unit 2340.

Next, the editing process according to the third embodiment performed on the picture signal displayed for the second viewing direction so that the picture exhibits a quasi-three-dimensional appearance for a viewer who is viewing from the first viewing direction will be explained. In the same fashion, it is also possible to display a picture that exhibits a quasi-three-dimensional appearance for a viewer who is viewing from the second viewing direction by changing the target on which the editing process is performed to the picture signal displayed for the first viewing direction.

The combining editing unit 2342c has a function to serve as an emphasized portion selecting unit that selects a portion to be displayed with an emphasis by the emphasized display processing unit 2343. The picture-signal editing unit 2342 extracts, from one of the picture signals, the portion that has been selected by the emphasized portion selecting unit. By displacing the pixels that correspond to the extracted portion with respect to the reference position in the predetermined direction by the predetermined amount, it is possible to display the portion of the picture displayed for the first viewing direction with an emphasis brought out by a picture that is displayed for the second viewing direction and fails to be blocked by the parallax barrier layer 2915.

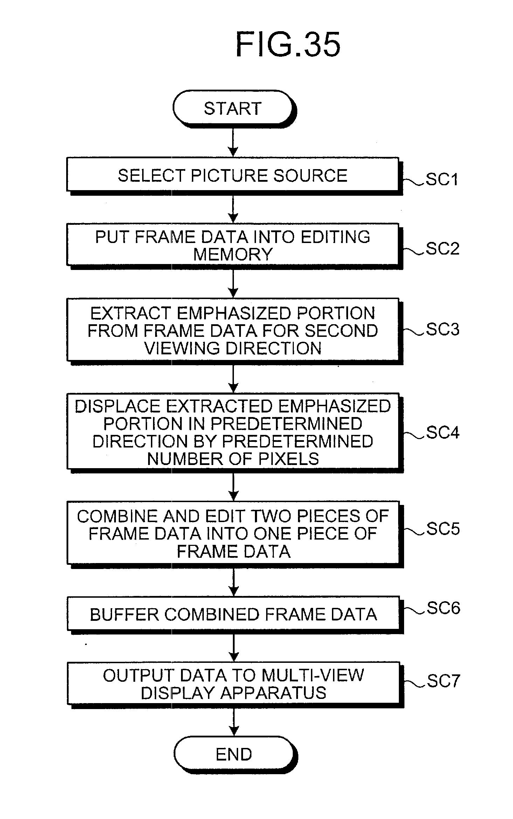

Based on emphasized portion selection information that has been input through an operation performed on the operating unit 2340, the emphasized portion selecting unit extracts only the emphasized portion from the frame data that corresponds to the second viewing direction and is stored in the editing memory 2342b and makes the remaining data blank data, i.e., data that is displayed in black. After that, the frame data is displaced with respect to the reference position in the predetermined direction by the predetermined amount and is then edited and combined with the frame data that corresponds to the first viewing direction and is stored in the editing memory 2342a. Subsequently, the edited frame data is stored into the output buffer as the frame data to be output. These steps in the editing process are shown in a flowchart in Fig. 35.

As for the emphasized portion selection information, it is possible to set, for example, coordinate information used for selecting a specific area displayed with an emphasis (for example, coordinate information of the vertexes when the area is rectangular), character information used for selecting a character portion included in a picture, color information used for selecting a portion of a picture that is colored with a specific color, static body information or dynamic body information used for selecting one of a static body and a dynamic body from a picture, and suggested route information used for selecting a suggested route portion out of a picture when the picture signal represents a guidance route picture provided by the navigation apparatus.

The operating unit 2340 is configured to include a touch panel provided on the display screen of the multi-view display unit 2301 and a menu display unit that displays a menu corresponding to the touch panel. The operating unit 2340 is configured so that menus are displayed in a hierarchical manner, the menus including, for example, a picture source selecting menu used for selecting a picture source, an emphasized display menu used for selecting whether the quasi-three-dimensional display should be applied to the selected picture source, an emphasized display mode selecting menu used after the emphasized display menu has been selected. It is possible to select an emphasized portion by using the emphasized portion selecting menu positioned in a hierarchical level subordinate to the emphasized display mode selecting menu.

When picture sources of two systems have been selected by using the picture source selecting menu, and also, it has been selected that no quasi-three-dimensional display should be applied to the picture by using the emphasized display menu, the display functions as the ordinary multi-view display, so that pictures having mutually different sources are displayed for the driver seat side and for the passenger seat side respectively. When a picture source of one system has been selected by using the picture source selecting menu, and it has been selected that a quasi-three-dimensional display should be applied to the picture by using the emphasized display menu, the quasi-three-dimensional display according to the present invention is performed.

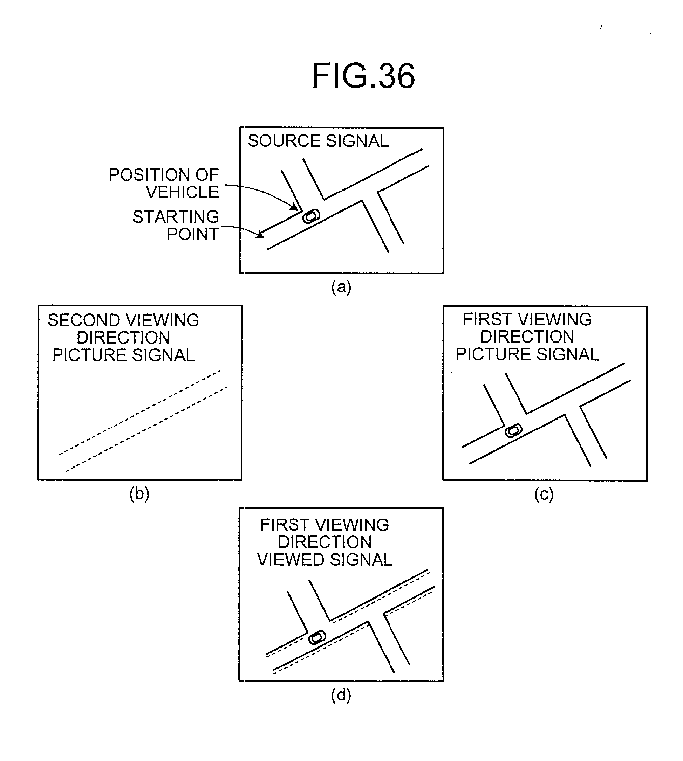

For example, when coordinate information is specified as the emphasized portion selection information, an area (or more than one areas) corresponding to the coordinate information is selected and extracted from the frame data that corresponds to the second viewing direction and is stored in the editing memory 2342b. When character information is specified, a character portion is selected and extracted. When color information is specified, pixels in the specified color are selected and extracted based on RGB data. When static body information or dynamic body information is specified, a corresponding static body or a corresponding dynamic body is selected and extracted. The character information is extracted by detecting an edge through binarization of pixel data. The dynamic body or the static body is extracted after being identified through a comparison of pixels between frames that are in a chronological sequence. However, the methods used in the extraction process are not limited to these examples. It is acceptable to use any other publicly-known methods, as necessary. Also, when the emphasized portion selection information is suggested route information, as shown in Fig. 36, it is possible to have an arrangement in which an emphasized portion is extracted based on attribute information that indicates a suggested route and is included in the source signal output from the driving-state-display processing unit 2309 included in the navigation apparatus N, or based on picture signal, if no attribution information is given, or based on color information, if the suggested route is displayed in a specific color. It goes without saying that it is possible to extract an emphasized portion based on other types of attribute information. In addition, the present invention may be also applied to a situation in which the entire screen is selected as a target to which the quasi-three-dimensional display is applied.

An emphasized display mode to be applied to the emphasized display portion selected by using the emphasized portion selecting menu is specified by using the emphasized display mode selecting menu described above. More specifically, on a screen provided for specifying a displacement direction and a displacement amount, the displacement direction and the displacement amount of the pixels are specified with respect to the reference position. On a screen provided for setting the luminance or the hue of the displaced pixels, the luminance or the hue of the shadow portion used in the quasi-three-dimensional display is specified. On a screen provided for selecting one out of a static display and a dynamic display, it is selected whether the quasi-three-dimensional display should be performed statically or dynamically. When the mode in which the quasi-three-dimensional display is performed dynamically has been selected, the screen is changed to another screen on which it is possible to specify one out of a mode based on an audio signal associated with the picture signal, a mode based on a picture attribute signal associated with the picture signal, and a mode based on an external input signal. When the mode based on an external input signal is selected, it is possible to specify, as the external input signal, a warning signal from an obstacle sensor installed on the vehicle, or an operation input signal to the operating unit 2340.

For example, when the mode in which the emphasized display is performed statically is selected, the emphasized display is always performed by using the specified displacement direction and the specified displacement amount. When the mode in which the emphasized display is performed dynamically is selected, the emphasized display state changes periodically or non-periodically within the range of the specified displacement direction and the specified displacement amount. In other words, the picture-signal editing unit 2342 performs the editing process by dynamically changing a combining editing process condition for each of the frames.

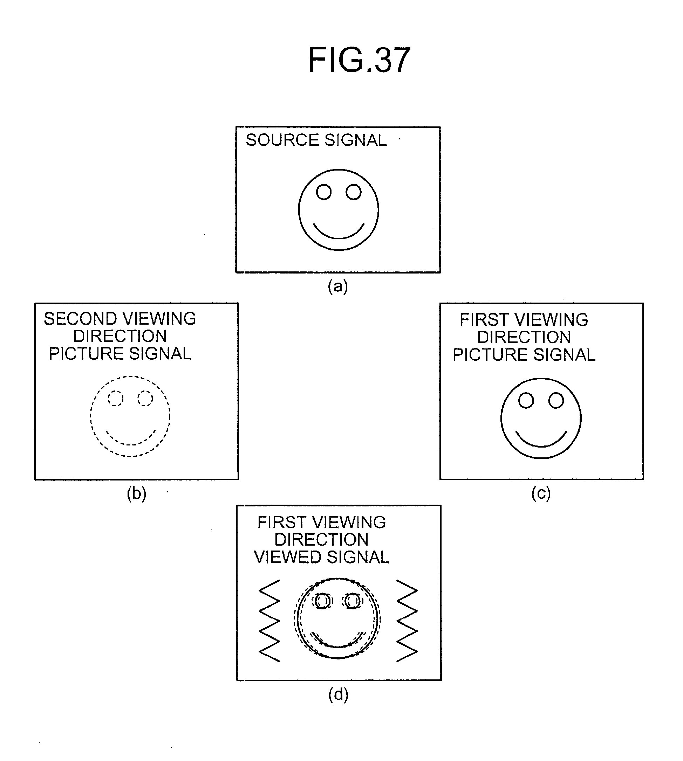

Even more specifically, when the mode based on an audio signal associated with the picture signal is selected, the picture signals are edited or stop being edited so that the pixel corresponding to the first viewing direction and the pixel corresponding to the second viewing direction that are driven by their respective picture signals are relatively displaced in a predetermined direction, based on the strength or the frequency of the audio signal associated with the picture signal. For example, as shown in Fig. 37(a) to Fig. 37(c), by applying a rhythmical sway to the emphasized display with a low-frequency signal, it is possible to achieve an effect where the picture becomes more enjoyable.

When the mode based on the picture attribute signal associated with the picture signal is selected, for example, when a picture in a program provided by digital terrestrial broadcasting is input as a source signal, a main picture and a commercial message (CM) picture of the program are identified using identification code embedded in header information of a TS packet as the picture attribute signal, so that it is possible to apply an emphasize display to the CM picture. In other words, by adding, on the source signal supplier side, an identifiable picture attribute signal in advance to a picture signal to which it is necessary to apply an emphasized display, it is possible to allow the picture-signal editing unit to identify the picture attribute signal so that the emphasized display is applied to the desired picture.

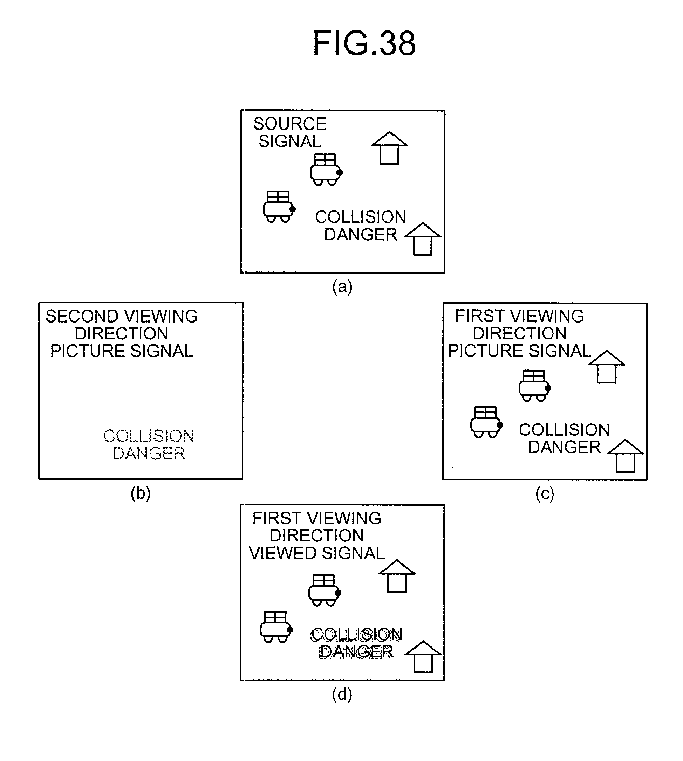

When the mode based on an external input signal is selected, and if, for example, as shown in Fig. 30, a warning signal from the obstacle sensor 11 that is installed on the vehicle and includes a millimeter wave radar is specified as the external input signal, a message notifying of danger is displayed when the warning signal has been input, with an emphasis using a quasi-outline display, as shown in Fig. 38. In this situation, the message is generated by a message generating unit (not shown) included in the picture-signal editing unit 2342 and superimposed onto data in the editing memories 2342a and 2342b. After that, the same process as described above is performed. When an operation input signal to the operating unit 2340 is specified as the external input signal, an arrangement is made so that the emphasized display stops when an operation is performed. By having this arrangement where the emphasized display stops when the operation is performed, it is possible to make a guidance display on the screen easier to see and to improve the operability.

Further, an adjusting unit that forcibly changes or stops the operational mode while the emphasized display with a quasi-three-dimensional display is being applied is provided. When the adjusting unit has detected that a viewer has touched the display screen of the multi-view display unit 1, the emphasized display is stopped. Alternatively, another arrangement is acceptable in which, when the adjusting unit has detected that a viewer has touched the display screen, the luminance or the hue of the shadow picture is adjusted to such a value that makes the shadow picture less noticeable, and if no operation is performed on the display screen for a predetermined period of time, the emphasized display is resumed. By having this arrangement, it is possible to make the guidance display on the screen easier to see and to improve the operability, like in the example described above.

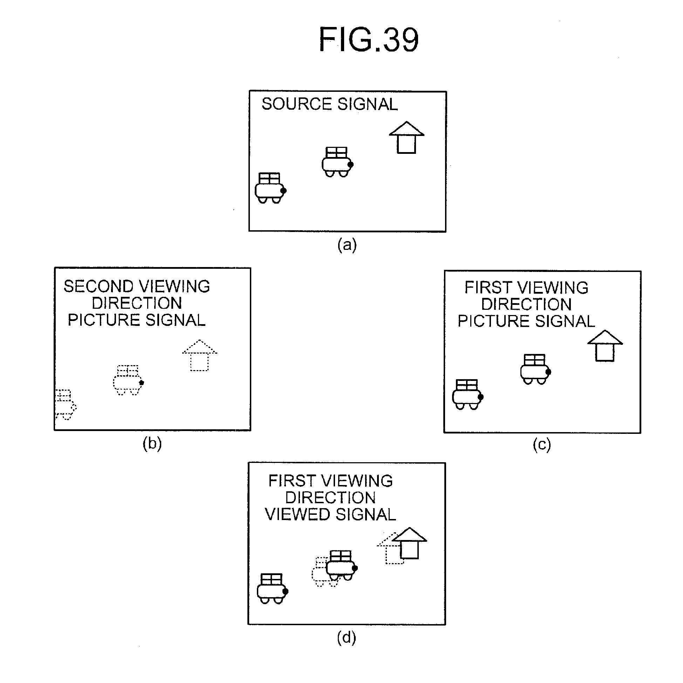

Further, the picture-signal editing unit 2342 edits the picture signals so that the pixel corresponding to the first viewing direction and the pixel corresponding to the second viewing direction that are driven by their respective picture signals having a common source signal are relatively displaced with respect to the reference position in the predetermined direction. Therefore, as a result of the editing process, there will be one or more areas that are not included in the picture signals. In other words, there will be one or more areas to which it is not possible to apply an emphasized display. To cope with this situation, as shown in Fig. 39, the areas to which emphasized display is not applicable (the areas filled with gray in Fig. 39(c)) are displayed with a predetermined color. Alternatively, by repeatedly placing a border portion picture in the areas to which emphasized display is applicable, up to the edge portion of the image, it is possible to easily recognize that emphasized display is not applicable to those areas.

The exemplary embodiments described above are only a part of possible examples of the present invention. It is possible to modify the various types of menus, the display, and the operating procedure of the operating unit 2340, as necessary. It goes without saying that the specific configuration of the picture-signal editing unit may be modified, as necessary, within a scope that is capable of achieving the advantageous effects of the present invention. The configuration of the picture-signal editing unit may be realized through software processing using a microcomputer, through hardware configuration using a gate array or the like, or through a configuration combining the software and the hardware.

When the coordinate information of a plurality of areas is specified as the emphasized portion selection information, another arrangement is acceptable in which it is possible to specify a displacement amount for each of the areas, so that the displacement degree is adjustable.

In the description of the exemplary embodiments above, the multi-view display apparatus that is installed in a vehicle and with which the viewers are able to view mutually different pictures from the driver seat and the passenger seat has been explained; however, a display apparatus to which the present invention can be applied is not limited to one installed in a vehicle. Also, it is possible to apply the present invention to a display apparatus with which the viewers are able to view mutually different pictures at the same time from a plurality of viewing directions, namely, two or more viewing directions.

In the description above, the examples in which a liquid crystal display panel like the one disclosed in Japanese Patent Application Laid-open No. 2004-206089 is used as the multi-view display unit has been explained. However, the present invention is not limited to these examples. It is possible to apply the present invention to a display like the one disclosed in Japanese Patent Application Laid-open No. 2003-15535 or any other multi-view display units in general that each include an organic EL, a plasma display, a CRT, or an SED.

The term "picture" or "pictures" used in the description of the present invention refers to both still images and moving images.

Note 1. A display control apparatus that controls a multi-view display apparatus that displays, on a single screen, mutually independent pictures that are respectively displayed for a plurality of viewing directions, the display control apparatus comprising:
   a control unit that adjusts and displays, to improve a picture quality level of one of the pictures displayed for one of the viewing directions, the other one or more of the pictures displayed for the other one or more of the viewing directions.
Note 2. The display control apparatus according to note 1, wherein the control unit displays the pictures for the other one or more of the viewing directions in monochrome.
Note 3. The display control apparatus according to note 1, wherein the control unit sets picture signals of pictures for the other viewing direction to a same luminance or to a monochrome color, based on an average luminance or an average color tone of a picture signal of the picture for the one of the viewing directions.
Note 4. The display control apparatus according to note 1, wherein the control unit displays the other of the pictures displayed for the other of the viewing directions, based on a picture signal that is substantially same as a picture signal displayed for the one of the viewing directions.
Note 5. The display control apparatus according to note 1, wherein the control unit adjusts a luminance of a picture signal displayed for the other of the viewing directions, based on an average luminance of a picture signal displayed for the one of the viewing directions.
Note 6. The display control apparatus according to note 1 or 5, wherein the control unit adjusts a color tone of a picture signal displayed for the other of the viewing directions, based on an average color tone of a picture signal displayed for the one of the viewing directions.
Note 7. The display control apparatus according to note 1, further comprising an illuminance detecting unit that detects a brightness level of surroundings of where the multi-view display apparatus is installed, wherein
   the control unit adjusts one of a luminance and a color tone of a picture signal, based on the detected brightness level.
Note 8. The display control apparatus according to note 1, further comprising a color detecting unit that detects a color tone of surroundings of where the multi-view display apparatus is installed, wherein
   the control unit adjusts one of a luminance and a color tone of a picture signal, based on the detected color tone.
Note 9. The display control apparatus according to any one of notes 1 to 8, further comprising a viewer detecting unit that detects a viewer in each viewing direction of the multi-view display apparatus, wherein
   when the viewer is detected in one viewing direction of the multi-view display apparatus, the control unit adjusts the pictures for the other of the viewing directions.
Note 10. A display control apparatus that controls a multi-view display apparatus in which pixels that constitute a screen are disposed so that a first pixel group and a second pixel group are arranged in a distributed manner and that is operable to display, at a same time, mutually independent pictures respectively for two directions by driving the first pixel group and the second pixel group independently of each other, based on a picture signal having mutually different sources, the display control apparatus comprising:
   a first driving mode control unit that drives the first pixel group and the second pixel group independently of each other based on the picture signal having the mutually different sources;
   a second driving mode control unit that drives one of the first pixel group and the second pixel group to improve a picture quality level of the picture displayed by one of the first pixel group and the second pixel group; and
   a mode switching unit that exercises control to switch between the first driving mode control unit and the second driving mode control unit.
Note 11. A display apparatus comprising:
   a display unit that is operable to display, on a single screen, mutually independent pictures that are respectively displayed for a plurality of viewing directions; and
   a control unit that adjusts and displays, to improve a picture quality level of one of the pictures displayed for one of the viewing directions, the other of the pictures displayed for the other of the viewing directions.
Note 12. A display apparatus comprising:
   a display unit that displays separate pictures for a plurality of viewing directions on a single screen; and
   a control unit that displays a picture for a specific viewing direction determined by a predetermined condition in monochrome.
Note 13. The display apparatus according to note 12, further comprising a viewer detecting unit that detects a viewer in each viewing direction, wherein
   the control unit displays a picture for a viewing direction from which the viewer is not detected in monochrome, base on a result of detection by the viewer detecting unit.
Note 14. The display apparatus according to note 12, further comprising a viewer detecting unit that detects a viewer in each viewing direction, wherein
   the control unit changes switches a picture for a viewing direction from which the viewer is not detected to a picture for a viewing direction from which the viewer is detected, based on a result of detection by the viewer detecting unit.
Note 15. The display apparatus according to note 12, wherein
   the predetermined condition is a priority set to the pictures, and
   the control unit displays a picture for a viewing direction having a low priority in monochrome.
Note 16. The display apparatus according to note 12, wherein
   the predetermined condition is a priority set to a combination of the pictures, and
   the control unit displays a picture for a viewing direction having a low priority in monochrome.
Note 17. The display apparatus according to note 12, wherein
   the display unit is installed in a vehicle,
   the predetermined condition is a priority set to a combination of the viewing directions and a state of the vehicle, and
   the control unit displays a picture for a viewing direction having a low priority in monochrome.
Note 18. A multi-view display apparatus that is operable to display, at a same time, mutually independent pictures that are respectively displayed for a plurality of viewing directions, based on a picture signal obtained by editing a plurality of source signals, the multi-view display apparatus comprising:
   a picture-signal generating unit that, when the source signals of the pictures that are respectively displayed for the viewing directions are same as each other, generates the picture signal from the source signals to improve a picture quality level of a picture viewed from a direction positioned between any two of the viewing directions that are positioned adjacent to each other.
Note 19. The multi-view display apparatus according to note 18, wherein
   the picture-signal generating unit includes
   a source-signal compressing unit that performs a pixel-skipping process on the source signals with a phase that corresponds to the viewing directions, and
   an editing processing unit that generates the picture signal by combining and editing, in correspondence with the viewing directions, the source signals on which a compressing process has been performed, and
   when the source signals of the pictures that are respectively displayed for the viewing directions are same as each other, the picture signal generated by the editing processing unit is same as each of the source signals.
Note 20. The multi-view display apparatus according to note 18, wherein the picture-signal generating unit includes
   a source-signal compressing unit that performs a pixel-skipping process on the source signals in correspondence with the viewing directions,
   an editing processing unit that generates the picture signal by combining and editing, in correspondence with the viewing directions, the source signals on which a compressing process has been performed, and
   a picture signal switching unit that makes an output, when the source signals of the pictures that are respectively displayed for the viewing directions are same as each other, by switching the source signals to the picture signal generated by the editing processing unit.
Note 21. The multi-view display apparatus according to any one of notes 18 to 20, further comprising:
   a plurality of displaying elements that are driven by the picture signal;
   a parallax barrier that allows output light beams from the displaying elements to pass in a specific one of the viewing directions; and
   a viewing-direction switching unit that is operable to switch, when the source signals of the pictures that are respectively displayed for the viewing directions are same as each other, a display surface direction of the multi-view display apparatus so that it is possible to view the picture from a direction positioned between any two of the viewing directions that are positioned adjacent to each other.
Note 22. The multi-view display apparatus according to note 21, wherein the viewing-direction switching unit is a posture switching unit that integrally rotates the displaying elements and the parallax barrier.
Note 23. The multi-view display apparatus according to any one of notes 18 to 20, further comprising:
   a plurality of displaying elements that are driven by the picture signal;
   a parallax barrier that allows output light beams from the displaying elements to pass in a specific one of the viewing directions; and
   a viewing-direction switching unit that is operable to switch, when the source signals of the pictures that are respectively displayed for the viewing directions are same as each other, a viewing direction of the multi-view display apparatus so that it is possible to view the picture from a direction positioned between any two of the viewing directions that are positioned adjacent to each other.
Note 24. The multi-view display apparatus according to note 23, wherein the viewing-direction switching unit is a parallax barrier switching unit that changes a position of the parallax barrier.
Note 25. The multi-view display apparatus according to any one of notes 21 to 24, further comprising a viewer detecting unit that detects whether there is any viewer in each of the viewing directions, wherein
   the viewing-direction switching unit operates based on a detection result obtained by the viewer detecting unit.
Note 26. A display apparatus comprising:
   a display unit that is operable to display, on a single screen, mutually independent pictures that are respectively displayed for a plurality of viewing directions, based on a picture signal obtained by editing a plurality of source signals; and
   a picture-signal generating unit that, when the source signals of the pictures that are respectively displayed for the viewing directions are same as each other, generates the picture signal that is same as each of the source signals.
Note 27. A display apparatus comprising:
   a display unit that is operable to display, on a single screen, mutually independent pictures that are respectively displayed for a plurality of viewing directions, based on a picture signal obtained by editing a plurality of source signals; and
   a picture-signal generating unit that, when the source signals of the pictures that are respectively displayed for the viewing directions are same as each other, outputs the source signals as the picture signal.
Note 28. The display apparatus according to note 26 or 27, further comprising:
   a plurality of displaying elements that are driven by the picture signal;
   a parallax barrier that allows output light beams from the displaying elements to pass in a specific direction; and
   a viewing-direction switching unit that is operable to switch, when the source signals of the pictures that are respectively displayed for the viewing directions are same as each other, a display surface direction of the display apparatus so that it is possible to view the picture from a direction positioned between any two of the viewing directions that are positioned adjacent to each other.
Note 29. The display apparatus according to note 28, wherein the viewing-direction switching unit is a posture switching unit that integrally rotates the displaying elements and the parallax barrier.
Note 30. The display apparatus according to note 26 or 27, further comprising:
   a plurality of displaying elements that are driven by the picture signal;
   a parallax barrier that allows output light beams from the displaying elements to pass in a specific one of the viewing directions; and
   a viewing-direction switching unit that is operable to switch, when the source signals of the pictures that are respectively displayed for the viewing directions are same as each other, a viewing direction of the multi-view display apparatus so that it is possible to view the picture from a direction positioned between any two of the viewing directions that are positioned adjacent to each other.
Note 31. The display apparatus according to note 30, wherein the viewing-direction switching unit is a parallax barrier switching unit that changes a position of the parallax barrier.
Note 32. The display apparatus according to any one of notes 28 to 31, further comprising a viewer detecting unit that detects whether there is any viewer in each of the viewing directions, wherein
   the viewing-direction switching unit operates based on a detection result obtained by the viewer detecting unit.
Note 33. A display apparatus comprising:
   a display unit that is operable to display, on a single screen, mutually independent pictures that are respectively displayed for a plurality of viewing directions, based on picture signals obtained by combining a plurality of source signals;
   a source-signal selecting unit that selects, as source signals in common, a source signal of a picture displayed for a specific first viewing direction and a source signal of a picture displayed for a second viewing direction that is different from the first viewing direction; and
   a picture-signal editing unit that generates the picture signals by performing an editing process so that a pixel that is driven by the source signal of the picture displayed for the first viewing direction and a pixel that is driven by the source signal of the picture displayed for the second viewing direction are relatively displaced with respect to a reference position.
Note 34. The display apparatus according to note 33, further comprising an emphasized display processing unit that drives the pixels respectively corresponding to the viewing directions, based on the picture signals edited by the picture-signal editing unit.
Note 35. The display apparatus according to note 33 or 34, wherein the picture-signal editing unit edits the picture signals so that a. relative displacement amount of the pixels respectively corresponding to the viewing directions is a predetermined amount that has been set in advance.
Note 36. The display apparatus according to note 33 or 34, wherein the picture-signal editing unit edits the picture signals so that a relative displacement amount of the pixels respectively corresponding to the viewing directions dynamically changes.
Note 37. The display apparatus according to note 33 or 34, wherein the picture-signal editing unit edits the picture signals so that one of a luminance and a color difference of one of the picture signals is different from that of the other of the picture signals.
Note 38. The display apparatus according to note 34, comprising an emphasized portion selecting unit that selects a portion that is displayed with an emphasis by the emphasized display processing unit, wherein
   the picture-signal editing unit extracts and edits the portion that is selected by the emphasized portion selecting, out of any one of the picture signals.
Note 39. The display apparatus according to note 38, wherein the emphasized portion selecting unit selects an emphasized display area that has been specified and input, out of the picture signals.
Note 40. The display apparatus according to note 38, wherein the emphasized portion selecting unit selects a character portion out of the picture signals.
Note 41. The display apparatus according to note 38, wherein the emphasized portion selecting unit selects a specific colored portion out of the picture signals.
Note 42. The display apparatus according to note 38, wherein the emphasized portion selecting unit selects one of a static body and a dynamic body out of the picture signals.
Note 43. The display apparatus according to note 38, wherein
   the picture signals are for a route guidance picture from a navigation apparatus, and
   the emphasized portion selecting unit selects a suggested route portion out of the picture signals.
Note 44. The display apparatus according to any one of notes 33 to 43, wherein the picture-signal editing unit either edits or stops editing the picture signals so that the pixels that are driven by the picture signals and respectively correspond to the first viewing direction and the second viewing direction are relatively displaced with respect to the reference position in a predetermined direction, at a predetermined time that is based on one of a strength and a frequency of an audio signal associated with the picture signals.
Note 45. The display apparatus according to any one of notes 33 to 43, wherein the picture-signal editing unit either edits or stops editing the picture signals so that the pixels that are driven by the picture signals and respectively correspond to the first viewing direction and the second viewing direction are relatively displaced with respect to the reference position in a predetermined direction, at a predetermined time that is based on a picture attribute signal associated with the picture signals.
Note 46. The display apparatus according to any one of notes 33 to 43, wherein the picture-signal editing unit either edits or stops editing the picture signals so that the pixels that are driven by the picture signals and respectively correspond to the first viewing direction and the second viewing direction are relatively displaced with respect to the reference position in a predetermined direction, at a predetermined time that is based on an external input signal.
Note 47. The display apparatus according to note 46, wherein the external input signal is a warning signal issued by an obstacle sensor installed on a vehicle.
Note 48. The display apparatus according to note 46, wherein the external input signal is an operation input signal to the display unit.
Note 49. The display apparatus according to note 34, wherein of the picture signals that have been edited by the picture-signal editing unit, an area to which it is not possible to apply the emphasized display is displayed with a predetermined color or displayed with a border portion picture of an area to which it is possible to apply the emphasized display.
Note 50. A display method comprising:
   selecting, as source signals in common, a source signal of a picture displayed for a specific first viewing direction and a source signal of a picture displayed for a second viewing direction that is different from the first viewing direction on a display unit that is operable to display, on a single screen, mutually independent pictures that are respectively displayed for a plurality of viewing directions, based on picture signals obtained by combining a plurality of source signals; and
   editing the picture signals so that a pixel that is driven by the source signal of the picture displayed for the first viewing direction and a pixel that is driven by the source signal of the picture displayed for the second viewing direction are relatively displaced with respect to a reference position.
Note 51. The display method according to note 50, further comprising driving the pixels respectively corresponding to the viewing directions, based on the picture signals edited at the editing.
Note 52. The display method according to note 50 or 51, wherein the editing includes editing the picture signals so that a relative displacement amount of the pixels respectively corresponding to the viewing directions is a predetermined amount that has been set in advance.
Note 53. The display method according to note 50 or 51, wherein the editing includes editing the picture signals so that a relative displacement amount of the pixels respectively corresponding to the viewing directions dynamically changes.
Note 54. The display method according to note 51, wherein the editing includes editing the picture signals so that one of a luminance and a color difference of one of the picture signals is different from that of the other of the picture signals.

## Claims

1. An apparatus for controlling a multi-view display apparatus that displays separate pictures for a plurality of viewing directions on a single screen, the display control apparatus comprising:
a control unit that controls an output of the pictures based on a relationship between the pictures.

2. The apparatus according to claim 1, wherein when a priority is set to the pictures, the control unit adjusts a second picture for a second viewing direction, so that a picture quality of a first picture for a first viewing direction having a high priority is improved.

3. The apparatus according to claim 2, wherein the control unit displays the second picture in monochrome.

4. The apparatus according to claim 2, wherein the control unit sets picture signals of second pictures for the second viewing direction to a same luminance or to a monochrome color, based on an average luminance or an average color tone of a picture signal of the first picture.

5. The apparatus according to claim 2, wherein the control unit adjusts at least one of a luminance and a color tone of a picture signal of the second picture, based on at least one of an average luminance and an average color tone of a picture signal of the first picture.

6. The apparatus according to claim 2, further comprising an installation-situation detecting unit that detects at least one of a brightness level and a color tone of surroundings of a place where the multi-view display apparatus is installed, wherein
the control unit adjusts at least one of a luminance and a color tone of a picture signal, based on a result of detection by the installation-situation detecting unit.

7. The apparatus according to any one of claims 2 to 6, further comprising a viewer detecting unit that detects a viewer in each viewing direction of the multi-view display apparatus, wherein
when the viewer is detected in one viewing direction of the multi-view display apparatus, the control unit adjusts the second picture.

8. The apparatus according to claim 1, wherein
the multi-view display apparatus includes a plurality of displaying elements and a parallax barrier that allows output lights from the displaying elements to pass in a specific viewing direction, and
when contents of the pictures are identical, the control unit controls at least one of the displaying elements and the parallax barrier so that the pictures can be view from an intermediate viewing direction between adjacent viewing directions.

9. The apparatus according to claim 8, wherein the control unit performs a control of integrally rotating the displaying elements and the parallax barrier.

10. The apparatus according to claim 8, wherein the control unit performs a control of changing a position of the parallax barrier.

11. The apparatus according to claim 1, wherein when contents of the pictures are identical, the control unit performs an editing so that a pixel that is driven by a source signal of a first picture for a first viewing direction and a pixel that is driven by a source signal of a second picture for a second viewing direction are displaced relative to a reference position.

12. The apparatus according to claim 11, wherein the control unit performs the editing so that a displacement amount relative to the reference position dynamically changes.

13. The apparatus according to claim 11, wherein the control unit selectively causes a portion of the picture to be displaced relatively to the reference position.

14. The apparatus according to claim 13, wherein the control unit selectively causes a guidance picture from a navigation apparatus to be displaced relatively to the reference position.

15. A display apparatus comprising:
a display unit that displays separate pictures for a plurality of viewing directions on a single screen; and
a control unit that displays a picture for a specific viewing direction determined by a predetermined condition in monochrome.

16. The display apparatus according to claim 15, further comprising a viewer detecting unit that detects a viewer in each viewing direction, wherein
the control unit displays a picture for a viewing direction from which the viewer is not detected in monochrome, base on a result of detection by the viewer detecting unit.

17. The display apparatus according to claim 15, further comprising a viewer detecting unit that detects a viewer in each viewing direction, wherein
the control unit changes switches a picture for a viewing direction from which the viewer is not detected to a picture for a viewing direction from which the viewer is detected, based on a result of detection by the viewer detecting unit.

18. The display apparatus according to claim 15, wherein
the predetermined condition is a priority set to the pictures, and
the control unit displays a picture for a viewing direction having a low priority in monochrome.

19. The display apparatus according to claim 15, wherein
the predetermined condition is a priority set to a combination of the pictures, and
the control unit displays a picture for a viewing direction having a low priority in monochrome.

20. The display apparatus according to claim 15, wherein the display unit is installed in a vehicle,
the predetermined condition is a priority set to a combination of the viewing directions and a state of the vehicle, and
the control unit displays a picture for a viewing direction having a low priority in monochrome.
